# EUROPEAN PATENT APPLICATION

(11) **EP 4 509 278 A1**
(43) Date of publication of application: **19.02.2025**
(21) Application number: 23868330.4
(22) Date of filing: 30.06.2023
(51) Int. Cl.: B25J 11/00, B25J 9/10, B25J 9/12, B25J 9/06, B25J 9/00, B25J 19/02, A47L 9/24, A47L 9/00, A47L 9/28

(54) **WIRE-DRIVEN EXOSKELETON MANIPULATOR AND ROBOT CLEANER COMPRISING SAME**

(30) Priority: 21.09.2022 KR 20220119626
(71) Applicant: Samsung Electronics Co., Ltd., Suwon-si, Gyeonggi-do 16677 (KR)
(72) Inventor: SON, Hyungmin, Suwon-si Gyeonggi-do 16677 (KR); SADI, Sajid, Mountain View, California 94043 (US); JUN, Leo, Suwon-si Gyeonggi-do 16677 (KR)
(74) Representative: Gulde & Partner
(86) International application number: PCT/KR2023/009202
(87) International publication number: WO 2024/063270

(57) **Abstract**

A manipulator includes a base link having a ring shape; a first ring-shaped link having a ring shape and disposed to rotate at a predetermined angle at a front end of the base link; a second ring-shaped link having a ring shape and disposed to rotate at a predetermined angle at a front end of the first ring-shaped link; a first Borden cable and a second Borden cable connected to the first ring-shaped link and formed to rotate the first ring-shaped link; a third Borden cable and a fourth Borden cable connected to the second ring-shaped link and formed to rotate the second ring-shaped link; and a driving device that operates the first Borden cable, the second Borden cable, the third Borden cable, and the fourth Borden cable.

## Description

### [Technical Field]

The disclosure relates to a wire-driven exoskeleton manipulator and a robot cleaner having the same.

### [Background Art]

Generally, a manipulator may include a plurality of links connected to each other. Each of the plurality of links may include an actuator capable of rotating the corresponding link. The actuator may be disposed adjacent to the corresponding link. Accordingly, the manipulator may position the front end thereof at various positions using the plurality of links driven by the plurality of actuators.

In general, a robot cleaner is formed to perform cleaning of a surface to be cleaned while driving autonomously. The robot cleaner includes a suction device that generates a suction force, and by using the suction force, may suck in dirt from a surface to be cleaned and collect it in a dust collecting device.

The robot cleaner is formed to travel on the surface to be cleaned and may include a suction nozzle provided to face the surface to be cleaned. Therefore, the robot cleaner may suck in dirt on the surface to be cleaned through the suction nozzle while moving on the surface to be cleaned.

### [Disclosure of Invention]

### [Technical Problem]

A manipulator according to one or more embodiments of the disclosure may include a base link having a ring shape; a first ring-shaped link having a ring shape and disposed to rotate at a predetermined angle at a front end of the base link; a second ring-shaped link having a ring shape and disposed to rotate at a predetermined angle at a front end of the first ring-shaped link; a first Borden cable and a second Borden cable connected, directly or indirectly, to the first ring-shaped link and formed to rotate the first ring-shaped link; a third Borden cable and a fourth Borden cable connected, directly or indirectly, to the second ring-shaped link and formed to rotate the second ring-shaped link; and a driving device that may operate, directly or indirectly, the first Borden cable, the second Borden cable, the third Borden cable, and the fourth Borden cable.

The first Borden cable may include a first flexible conduit having one end connected, directly or indirectly, to the driving device and another end connected, directly or indirectly, to the base link; and a first wire accommodated inside the first flexible conduit and having one end connected, directly or indirectly, to the driving device and another end fixed, directly or indirectly, to the first ring-shaped link.

The second Borden cable may include a second flexible conduit having one end connected, directly or indirectly, to the driving device and another end connected, directly or indirectly, to the base link opposite to the first flexible conduit based on a rotation axis of the first ring-shaped link; and a second wire accommodated inside the second flexible conduit and having one end connected, directly or indirectly, to the driving device and another end fixed to the first ring-shaped link opposite to the first wire based on a rotation axis of the first ring-shaped link.

The third Borden cable may include a third flexible conduit having one end connected, directly or indirectly, to the driving device and another end connected, directly or indirectly, to the first ring-shaped link; and a third wire accommodated inside the third flexible conduit and having one end connected, directly or indirectly, to the driving device and another end fixed, directly or indirectly, to the second ring-shaped link.

The fourth Borden cable may include a fourth flexible conduit having one end connected, directly or indirectly, to the driving device and another end connected, directly or indirectly, to the first ring-shaped link opposite to the third flexible conduit based on a rotation axis of the second ring-shaped link; and a fourth wire accommodated inside the fourth flexible conduit and having one end connected, directly or indirectly, to the driving device and another end fixed to the second ring-shaped link opposite to the third wire based on a rotation axis of the second ring-shaped link.

The driving device may include a first motor including a first motor shaft; a first drum disposed to rotate integrally with the first motor shaft; a second motor including a second motor shaft; and a second drum disposed to rotate integrally with the second motor shaft. The one end of the first wire and the one end of the second wire may be fixed to the first drum. The one end of the third wire and the one end of the fourth wire may be fixed to the second drum.

The driving device may include a motor; a first drum to which the one end of the first wire and the one end of the second wire are fixed; a second drum to which the one end of the third wire and the one end of the fourth wire are fixed; and a clutch formed to selectively transmit rotational force of the motor to one of the first drum and the second drum.

The first ring-shaped link may be rotatably connected, directly or indirectly, to the base link by a pair of first hinges. The second ring-shaped link may be rotatably connected, directly or indirectly, to the first ring-shaped link by at least a pair of second hinges.

A rotation axis of the pair of first hinges and a rotation axis of the pair of second hinges may be not parallel to each other.

The manipulator may include a first angle sensor configured to detect a rotation angle of the first ring-shaped link; and a second angle sensor configured to detect a rotation angle of the second ring-shaped link.

Each of the first Borden cable, the second Borden cable, the third Borden cable, and the fourth Borden cable may include a tension adjuster.

According to another aspect of the disclosure, a robot cleaner may include: a main body; a manipulator disposed on (directly or indirectly) a front surface of the main body and including any one of the above features; a tilting device configured to rotate the manipulator at a predetermined angle with respect to the main body; a lifting device configured to lift the manipulator and the tilting device; a suction pipe disposed inside the manipulator; a suction device connected, directly or indirectly, to the suction pipe and configured to collect dirt by generating a suction force; a moving device configured to move the main body; and a processor configured to control the manipulator, the tilting device, the lifting device, the suction device, and the moving device.

The lifting device may include a lifting guide vertically disposed on a base of the main body behind the manipulator; a lifting block provided to move up and down along the lifting guide; and a lifting driver configured to move the lifting block up and down with respect to the lifting guide.

The lifting driver may include a rack gear disposed in a vertical direction to the lifting guide; a lifting pinion meshed with the rack gear; and a lifting motor disposed on the lifting block and configured to rotate the lifting pinion.

The tilting device may include a tilting base provided on, directly or indirectly, the lifting block; a tilting shaft disposed on the base link of the manipulator; and a tilting driver configured to rotate the tilting shaft.

The tilting driver may include a tilting motor configured to generate rotational force; and a power transmission device disposed on one surface of the tilting base and formed to transmit the rotational force of the tilting motor to the tilting shaft.

Each of the first ring-shaped link and the second ring-shaped link may include a holder disposed at a center of each of the first ring-shaped link and the second ring-shaped link and fixing the suction pipe.

### [Brief Description of Drawings]

These and/or other aspects, features, and advantages of certain embodiments of the disclosure will be more apparent from the following description taken in conjunction with the accompanying drawings, in which:
FIG. 1 is a perspective view illustrating a manipulator according to one or more embodiments of the disclosure.
FIG. 2 is an exploded perspective view illustrating a plurality of ring-shaped links according to one or more embodiments of the disclosure.
FIG. 3 is a perspective view illustrating a ring-shaped link according to one or more embodiments of the disclosure.
FIG. 4 is a conceptual view for explaining arrangement of a plurality of Borden cables of a manipulator according to one or more embodiments of the disclosure.
FIG. 5 is a conceptual view of FIG 4 viewed from the top for explaining arrangement of the plurality of Borden cables of a manipulator according to one or more embodiments of the disclosure.
FIG. 6 is a conceptual view for explaining another example of arrangement of a plurality of Borden cables of a manipulator according to one or more embodiments of the disclosure.
FIG. 7 is a perspective view illustrating a motor assembly used in the manipulator of FIG 1.
FIG. 8 is a cross-sectional view illustrating the motor assembly of FIG 7 taken along line A-A.
FIG. 9 is a cross-sectional view illustrating the motor assembly of FIG 7 taken along line B-B.
FIG. 10 is a perspective view illustrating a tension adjuster used in a manipulator according to one or more embodiments of the disclosure.
FIG. 11 is a conceptual view illustrating a driving device used in a manipulator according to one or more embodiments of the disclosure.
FIG. 12 is a view for explaining operation of a manipulator according to one or more embodiments of the disclosure.
FIG. 13 is a view for explaining operation of a manipulator according to one or more embodiments of the disclosure.
FIG. 14 is a perspective view illustrating a robot cleaner according to one or more embodiments of the disclosure.
FIG. 15 is a functional block diagram of a robot cleaner according to one or more embodiments of the disclosure.
FIG. 16 is a cross-sectional view illustrating a robot cleaner according to one or more embodiments of the disclosure.
FIG. 17 is a perspective view illustrating a lifting device and a tilting device of a robot cleaner according to one or more embodiments of the disclosure.
FIG. 18 is a partial perspective view illustrating a lifting device and a tilting device of a robot cleaner according to one or more embodiments of the disclosure.
FIG. 19 is a cross-sectional view illustrating the lifting device and the tilting device of FIG 17 taken along line C-C.
FIG. 20 is a cross-sectional view illustrating the lifting device and the tilting device of FIG 19 taken along line D-D.
FIG. 21 is a view illustrating a state in which a manipulator of a robot cleaner according to one or more embodiments of the disclosure moves up and rotates at a certain angle.

### [Best Mode for Carrying out the Invention]

Since the embodiments of the disclosure can apply various transformations and have various embodiments, specific embodiments will be illustrated in the drawings and described in detail in the detailed description. However, this is not intended to limit the scope to the specific embodiments, and should be understood to include various modifications, equivalents, and/or alternatives of the embodiment of the disclosure. In connection with the description of the drawings, like reference numerals may be used for like elements.

In describing the disclosure, when it is determined that a detailed description of a related known function or configuration may unnecessarily obscure the gist of the disclosure, a detailed description thereof will be omitted.

In addition, the following embodiments may be modified in many different forms, and the scope of the technical idea of the disclosure is not limited to the following embodiments. Rather, these embodiments are provided so that this disclosure will be thorough and complete, and will fully convey the spirit of the disclosure to those skilled in the art.

Terms used in this disclosure are only used to describe specific embodiments, and are not intended to limit the scope of rights. Singular expressions include plural expressions unless the context clearly dictates otherwise.

In this disclosure, expressions such as "has," "can have", "includes," or "can include" indicate the existence of a corresponding feature (e.g., numerical value, function, operation, or component such as a part) and do not preclude the existence of additional features.

In this disclosure, expressions such as "A or B," "at least one of A or/and B," or "one or more of A or/and B" may include all possible combinations of the items listed together. For example, "A or B," "at least one of A or/and B," or "one or more of A or/and B" may refer to all cases (1) including at least one A, (2) including at least one B, or (3) including both at least one A and at least one B.

Expressions such as "first," "second," "primary," or "secondary," as used in this disclosure may modify various components regardless of order and/or importance, are used only to distinguish one component from other components, and do not limit the corresponding components.

Further, terms such as `leading end', `rear end', `upper side', 'lower side', 'top end', `bottom end', etc. used in the disclosure are defined with reference to the drawings. However, the shape and position of each component are not limited by these terms.

Hereinafter, embodiments of a manipulator 1 according to the disclosure will be described in detail with reference to the accompanying drawings.

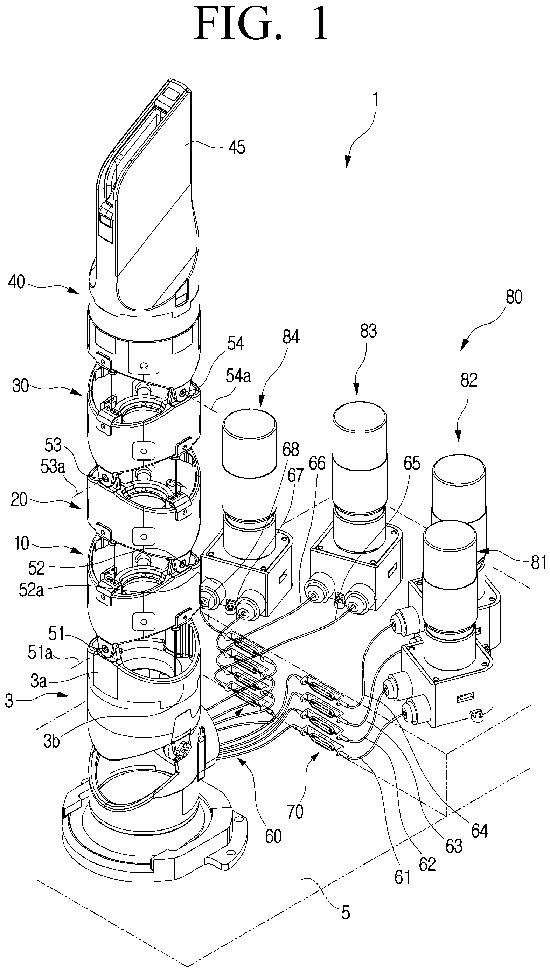

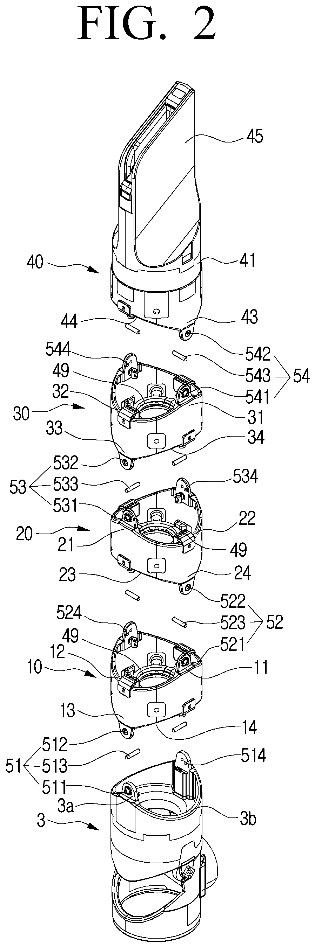

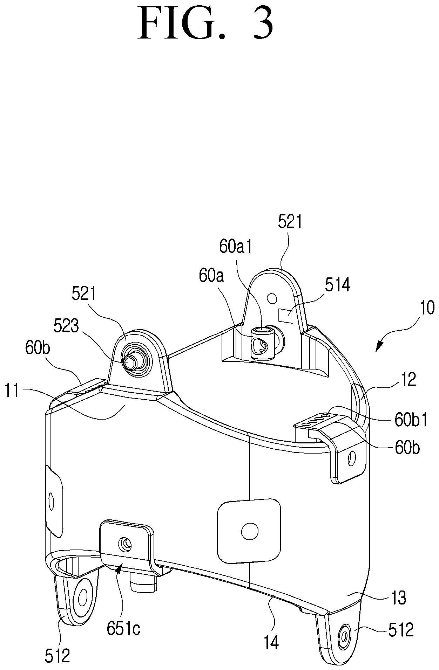

FIG 1 is a perspective view illustrating a manipulator according to one or more embodiments of the disclosure. FIG 2 is an exploded perspective view illustrating a plurality of ring-shaped links according to one or more embodiments of the disclosure. FIG 3 is a perspective view illustrating a ring-shaped link according to one or more embodiments of the disclosure.

Referring to FIG 1, a manipulator 1 according to one or more embodiments of the disclosure may include a base link 3, a plurality of ring-shaped links 10, 20, 30, and 40, a plurality of Borden cables 60, and a driving device 80.

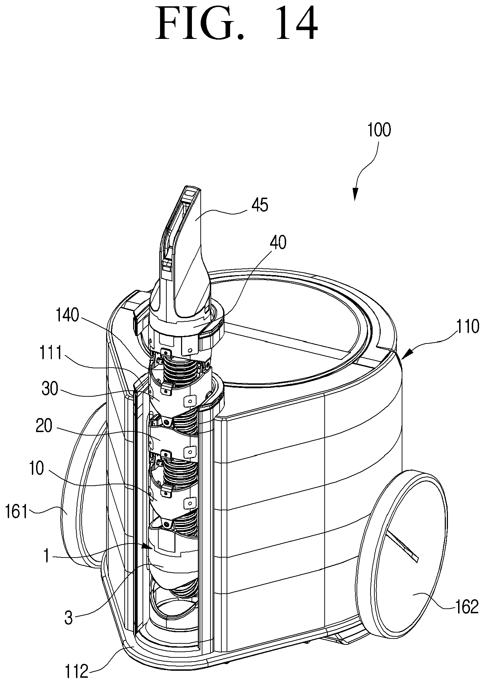

The base link 3 may be fixed to a base 5. The base 5 refers to a thing on which the manipulator 1 is disposed and may support various operations of the manipulator 1. For example, in the case of a robot cleaner 100 (e.g., see Fig. 14), a main body 110 of the robot cleaner 100 may be the base 5. Alternatively, the base 5 may be a body of a retail robot. Alternatively, the base 5 may be a fixed wall or floor.

The base link 3 may have a ring shape. In other words, the base link 3 may have a hollow cylindrical shape. The rear end of the base link 3 may be fixed to the base 5, and the plurality of ring-shaped links 10, 20, 30, and 40 may be rotatably coupled to the front end of the base link 3.

A pair of convex portions 3a and a pair of concave portions 3b may be provided at the front end of the base link 3. The pair of convex portions 3a and the pair of concave portions 3b may be alternately arranged in the circumferential direction of the base link 3. Accordingly, the pair of convex portions 3a may face each other, and the pair of concave portions 3b may face each other.

The plurality of ring-shaped links 10, 20, 30, and 40 may be connected, directly or indirectly, to the front end of the base link 3. The plurality of ring-shaped links 10, 20, 30, and 40 may be connected, directly or indirectly, to the pair of convex portions 3a of the base link 3. The plurality of ring-shaped links 10, 20, 30, and 40 may be disposed to rotate at a predetermined angle with respect to the base link 3.

The plurality of ring-shaped links 10, 20, 30, and 40 may include a number corresponding to the propose of the manipulator 1. For example, in the case of embodiment shown in FIG 1, the manipulator 1 includes four ring-shaped links 10, 20, 30, and 40.

Referring to FIGS. 1 and 2, a first ring-shaped link 10 may be disposed to rotate a predetermined angle at the front end of the base link 3. The first ring-shaped link 10 may be hingedly connected, directly or indirectly, to the front end of the base link 3.

Referring to FIGS. 1 to 3, the first ring-shaped link 10 may be formed in a ring shape. In other words, the first ring-shaped link 10 may have a hollow cylindrical shape. The rear end of the first ring-shaped link 10 may be rotatably connected, directly or indirectly, to the base link 3, and the front end thereof may be rotatably connected, directly or indirectly, to a second ring-shaped link 20.

A pair of front convex portions 11 and a pair of front concave portions 12 may be provided at the front end of the first ring-shaped link 10. The pair of front convex portions 11 and the pair of front concave portions 12 may be alternately arranged in the circumferential direction of the first ring-shaped link 10. Accordingly, the pair of front convex portions 11 may face each other, and the pair of front concave portions 12 may face each other. The pair of front convex portions 11 may be formed in a convex curve, and the pair of front concave portions 12 may be formed in a concave curve. The front convex portion 11 and the front concave portion 12 adjacent to each other may be connected smoothly.

A pair of rear convex portions 13 and a pair of rear concave portions 14 may be provided at the rear end of the first ring-shaped link 10. The pair of rear convex portions 13 and the pair of rear concave portions 14 may be alternately arranged in the circumferential direction of the first ring-shaped link 10. The pair of rear convex portions 13 provided at the rear end of the first ring-shaped link 10 may be formed to correspond to the pair of front concave portions 12 provided at the front end thereof.

In addition, the pair of rear concave portions 14 provided at the rear end of the first ring-shaped link 10 may be formed to correspond to the pair of front convex portions 11 provided at the front end thereof. The pair of rear convex portions 13 may be formed in a convex curve, and the pair of rear concave portions 14 may be formed in a concave curve. The rear convex portion 13 and the rear concave portion 14 adjacent to each other may be connected smoothly.

Therefore, the first ring-shaped link 10 may be formed in a hollow cylindrical shape having substantially wave-shaped front and rear ends and substantially the same length in the circumferential direction.

The first ring-shaped link 10 may be rotatably connected, directly or indirectly, to the base link 3 by a pair of first hinges 51.

The pair of first hinges 51 may be provided between the pair of rear convex portions 13 of the first ring-shaped link 10 and the pair of convex portions 3a of the base link 3. The pair of first hinges 51 may be disposed to face each other. In other words, the first hinges 51 may be disposed at intervals of 180 degrees at the lower end of the first ring-shaped link 10.

Each of the pair of first hinges 51 may include a rear hinge plate 512 provided at the lower end of the rear convex portion 13 of the first ring-shaped link 10, a front hinge plate 511 provided at the upper end of the convex portion 3a of the base link 3, and a hinge pin 513 connecting the front hinge plate 511 and the rear hinge plate 512.

Accordingly, the first ring-shaped link 10 may rotate at a predetermined angle with respect to the base link 3 around the hinge pins 513 of the pair of first hinges 51. In other words, the first ring-shaped link 10 may rotate at a predetermined angle around a rotation axis 51a of the pair of first hinges 51 formed by the two hinge pins 513. Thus, the rotation axis 51a of the pair of first hinges 51 may form a rotation axis of the first ring-shaped link 10.

Rotation of the first ring-shaped link 10 may be limited by the rear concave portions 14 of the first ring-shaped link 10 and the concave portions 3b of the base link 3.

A first angle sensor 514 capable of detecting a rotation angle of the first ring-shaped link 10 may be disposed in the first hinges 51. The first angle sensor 514 may be configured to detect a rotation angle of the first ring-shaped link 10 with respect to the base link 3. A potential meter may be used as the first angle sensor 514.

The second ring-shaped link 20 may be disposed at a front end of the first ring-shaped link 10 to rotate at a predetermined angle. The second ring-shaped link 20 may be hingedly connected to the front end of the first ring-shaped link 10.

The second ring-shaped link 20 may be formed in a ring shape. In other words, the second ring-shaped link 20 may have a hollow cylindrical shape. The rear end of the second ring-shaped link 20 may be rotatably connected, directly or indirectly, to the first ring-shaped link 10, and the front end thereof may be rotatably connected, directly or indirectly, to a third ring-shaped link 30.

The second ring-shaped link 20 may be formed identically or similarly to the first ring-shaped link 10.

A pair of front convex portions 21 and a pair of front concave portions 22 may be provided at the front end of the second ring-shaped link 20. The pair of front convex portions 21 and the pair of front concave portions 22 may be alternately disposed in the circumferential direction of the second ring-shaped link 20. Accordingly, the pair of front convex portions 21 may face each other, and the pair of front concave portions 22 may face each other. The pair of front convex portions 21 may be formed in a convex curve, and the pair of front concave portions 22 may be formed in a concave curve. The front convex portion 21 and the front concave portion 22 adjacent to each other may be connected smoothly.

A pair of rear convex portions 23 and a pair of rear concave portions 24 may be provided at the rear end of the second ring-shaped link 20. The pair of rear convex portions 23 and the pair of rear concave portions 24 may be alternately disposed in the circumferential direction of the second ring-shaped link 20. The pair of rear convex portions 23 provided at the rear end of the second ring-shaped link 20 may be formed to correspond to the pair of front concave portions 22 provided at the front end thereof. In addition, the pair of rear concave portions 24 provided at the rear end of the second ring-shaped link 20 may be formed to correspond to the pair of front convex portions 21 provided at the front end thereof.

The pair of rear convex portions 23 may be formed in a convex curve, and the pair of rear concave portions 24 may be formed in a concave curve. The rear convex portion 23 and the rear concave portion 24 adjacent to each other may be connected smoothly.

Therefore, the second ring-shaped link 20 may be formed in a hollow cylindrical shape having substantially wave-shaped front and rear ends and substantially the same length in the circumferential direction.

The second ring-shaped link 20 may be rotatably connected, directly or indirectly, to the first ring-shaped link 10 by a pair of second hinges 52. The second hinges 52 may be formed identically or similarly to the pair of first hinges 51 described above.

The pair of second hinges 52 may be provided between the pair of rear convex portions 23 of the second ring-shaped link 20 and the pair of front convex portions 11 of the first ring-shaped link 10. The pair of second hinges 52 may be disposed to face each other. In other words, the pair of second hinges 52 may be disposed at intervals of 180 degrees at the lower end of the second ring-shaped link 20.

Each of the pair of second hinges 52 may include a rear hinge plate 522 provided at the lower end of the rear convex portion 23 of the second ring-shaped link 20, a front hinge plate 521 provided at the upper end of the front convex portion 11 of the first ring-shaped link 10, and a hinge pin 523 connecting the rear hinge plate 522 of the second ring-shaped link 20 and the front hinge plate 521 of the first ring-shaped link 10.

Accordingly, the second ring-shaped link 20 may rotate at a predetermined angle with respect to the first ring-shaped link 10 around the hinge pins 523 of the pair of second hinges 52. In other words, the second ring-shaped link 20 may rotate at a predetermined angle around a rotation axis 52a of the pair of second hinges 52 formed by the two hinge pins 523. Thus, the rotation axis 52a of the pair of second hinges 52 may form a rotation axis of the second ring-shaped link 20.

Rotation of the second ring-shaped link 20 may be limited by the rear concave portions 24 of the second ring-shaped link 20 and the front concave portions 12 of the first ring-shaped link 10.

A second angle sensor 524 capable of detecting a rotation angle of the second ring-shaped link 20 may be disposed in the second hinges 52. The second angle sensor 524 may be configured to detect a rotation angle of the second ring-shaped link 20 with respect to the first ring-shaped link 10. A potential meter may be used as the second angle sensor 524.

The rotation axis 52a of the pair of second hinges 52 may be disposed not parallel to the rotation axis 51a of the pair of first hinges 51. For example, as illustrated in FIG 1, the rotation axis 52a of the pair of second hinges 52 may be arranged to be substantially perpendicular to the rotation axis 51a of the pair of first hinges 51.

The third ring-shaped link 30 may be disposed at a front end of the second ring-shaped link 20 to rotate at a predetermined angle. The third ring-shaped link 30 may be hingedly connected, directly or indirectly, to the front end of the second ring-shaped link 20.

The third ring-shaped link 30 may have a ring shape, that is, a hollow cylindrical shape. The rear end of the third ring-shaped link 30 may be rotatably connected, directly or indirectly, to the second ring-shaped link 20, and the front end thereof may be rotatably connected, directly or indirectly, to a fourth ring-shaped link 40.

The third ring-shaped link 30 may be formed identically or similarly to the first ring-shaped link 10 or the second ring-shaped link 20.

A pair of front convex portions 31 and a pair of front concave portions 32 may be provided at the front end of the third ring-shaped link 30.

A pair of rear convex portions 33 and a pair of rear concave portions 34 may be provided at the rear end of the third ring-shaped link 30.

Therefore, the third ring-shaped link 30 may be formed in a hollow cylindrical shape having substantially wave-shaped front and rear ends and substantially the same length in the circumferential direction.

The third ring-shaped link 30 may be rotatably connected to the second ring-shaped link 20 by a pair of third hinges 53. The pair of third hinges 53 may be formed identically or similarly to the pair of first hinges 51 described above.

The pair of third hinges 53 may be provided between the pair of rear convex portions 33 of the third ring-shaped link 30 and the pair of front convex portions 21 of the second ring-shaped link 20. The pair of third hinges 53 may be disposed to face each other. In other words, the pair of third hinges 53 may be disposed at intervals of 180 degrees at the lower end of the third ring-shaped link 30.

Each of the pair of third hinges 53 may include a rear hinge plate 532 provided at the lower end of the rear convex portion 33 of the third ring-shaped link 30, a front hinge plate 531 provided at the upper end of the front convex portion 21 of the second ring-shaped link 20, and a hinge pin 533 connecting the rear hinge plate 532 of the third ring-shaped link 30 and the front hinge plate 531 of the second ring-shaped link 20.

Accordingly, the third ring-shaped link 30 may rotate at a predetermined angle with respect to the second ring-shaped link 20 around the hinge pins 533 of the pair of third hinges 53. In other words, the third ring-shaped link 30 may rotate at a predetermined angle around a rotation axis 53a of the pair of third hinges 53 formed by the two hinge pins 533. Thus, the rotation axis 53a of the pair of third hinges 53 may form a rotation axis of the third ring-shaped link 30.

Rotation of the third ring-shaped link 30 may be limited by the rear concave portions 34 of the third ring-shaped link 30 and the front concave portions 22 of the second ring-shaped link 20.

A third angle sensor 534 capable of detecting a rotation angle of the third ring-shaped link 30 may be disposed in the third hinges 53. The third angle sensor 534 may be configured to detect a rotation angle of the third ring-shaped link 30 with respect to the second ring-shaped link 20. A potential meter may be used as the third angle sensor 534.

The rotation axis 53a of the pair of third hinges 53 may be disposed not parallel to the rotation axis 52a of the pair of second hinges 52. For example, as illustrated in FIG 1, the rotation axis 53a of the pair of third hinges 53 may be arranged to be substantially perpendicular to the rotation axis 52a of the pair of second hinges 52. In this case, the rotation axis 53a of the pair of third hinges 53 may be arranged substantially parallel to the rotation axis 51a of the pair of first hinges 51.

A fourth ring-shaped link 40 may be disposed at a front end of the third ring-shaped link 30 to rotate at a predetermined angle. The fourth ring-shaped link 40 may be hingedly connected to the front end of the third ring-shaped link 30.

The fourth ring-shaped link 40 may be formed in a ring shape. In other words, the fourth ring-shaped link 40 may have a hollow cylindrical shape. The rear end of the fourth ring-shaped link 40 may be rotatably connected to the third ring-shaped link 30, and a work tool 45 may be disposed at the front end of the fourth ring-shaped link 40.

For example, in the case of the robot cleaner 100, a suction nozzle may be disposed at the front end of the fourth ring-shaped link 40. However, the work tool 45 is not limited thereto. The work tool 45 may include various devices according to the purpose of the manipulator 1.

The fourth ring-shaped link 40 may be formed similarly to the first ring-shaped link 10.

A pair of rear convex portions 43 and a pair of rear concave portions 44 may be provided at the rear end of the fourth ring-shaped link 40. The pair of rear convex portions 43 and the pair of rear concave portions 44 may be alternately disposed in the circumferential direction of the fourth ring-shaped link 40. Accordingly, the pair of rear convex portions 43 may face each other, and the pair of rear concave portions 44 may face each other. The pair of rear convex portions 43 may be formed in a convex curve, and the pair of rear concave portions 44 may be formed in a concave curve. The rear convex portion 43 and the rear concave portion 44 adjacent to each other may be connected smoothly.

The work tool 45 may be disposed at the front end 41 of the fourth ring-shaped link 40. The front end 41 of the fourth ring-shaped link 40 may be formed in a shape corresponding to the work tool 45 so as to fix the work tool 45.

The fourth ring-shaped link 40 may be rotatably connected to the third ring-shaped link 30 by a pair of fourth hinges 54. The pair of fourth hinges 54 may be formed identically or similarly to the pair of first hinges 51 described above.

The pair of fourth hinges 54 may be provided between the pair of rear convex portions 43 of the fourth ring-shaped link 40 and the pair of front convex portions 31 of the third ring-shaped link 30. The pair of fourth hinges 54 may be disposed to face each other. In other words, the pair of fourth hinges 54 may be disposed at intervals of 180 degrees at the lower end of the fourth ring-shaped link 40.

Each of the pair of fourth hinges 54 may include a rear hinge plate 542 provided at the lower end of the rear convex portion 43 of the fourth ring-shaped link 40, a front hinge plate 541 provided at the upper end of the front convex portion 31 of the third ring-shaped link 30, and a hinge pin 543 connecting the rear hinge plate 542 of the fourth ring-shaped link 40 and the front hinge plate 541 of the third ring-shaped link 30.

Accordingly, the fourth ring-shaped link 40 may rotate at a predetermined angle with respect to the third ring-shaped link 30 around the hinge pins 543 of the pair of fourth hinges 54. In other words, the fourth ring-shaped link 40 may rotate at a predetermined angle around a rotation axis 54a of the pair of fourth hinges 54 formed by the two hinge pins 543. Thus, the rotation axis 54a of the pair of fourth hinges 54 may form a rotation axis of the fourth ring-shaped link 40.

Rotation of the fourth ring-shaped link 40 may be limited by the rear concave portions 44 of the fourth ring-shaped link 40 and the front concave portions 32 of the third ring-shaped link 30.

A fourth angle sensor 544 capable of detecting a rotation angle of the fourth ring-shaped link 40 may be disposed in the fourth hinges 54. The fourth angle sensor 544 may be configured to detect a rotation angle of the fourth ring-shaped link 40 with respect to the third ring-shaped link 30. A potential meter may be used as the fourth angle sensor 544. The fourth angle sensor 544 may be configured in the same manner as the first to third angle sensors 514, 524, and 534 described above.

The rotation axis 54a of the pair of fourth hinges 54 may be disposed not parallel to the rotation axis 53a of the pair of third hinges 53. For example, as illustrated in FIG 1, the rotation axis 54a of the pair of fourth hinges 54 may be arranged to be substantially perpendicular to the rotation axis 53a of the pair of third hinges 53.

A holder 49 may be disposed inside each of the plurality of ring-shaped links 10, 20, 30, and 40. The holder 49 may be formed to fix a part connected to the work tool 45 disposed at the front end of the fourth ring-shaped link 40. For example, when the work tool 45 is a suction nozzle, the holder 49 may be formed to fix a suction pipe 140 connected to the suction nozzle.

A plurality of Borden cables 60 may be disposed to operate the plurality of ring-shaped links 10, 20, 30, and 40. The plurality of Borden cables 60 may be provided to correspond to the plurality of ring-shaped links 10, 20, 30, and 40. Each of plurality of Borden cables 60 may include a flexible conduit and a wire accommodated at least partially inside the flexible conduit. The wire may slide inside the flexible conduit.

One ring-shaped link may be rotated at a certain angle by means of two Borden cables. Accordingly, the manipulator 1 as in the embodiment shown in FIG 1 may include four ring-shaped links 10, 20, 30, and 40 and eight Borden cables 61 to 68. The plurality of Borden cables 60 may be disposed inside the plurality of ring-shaped links 10, 20, 30, and 40.

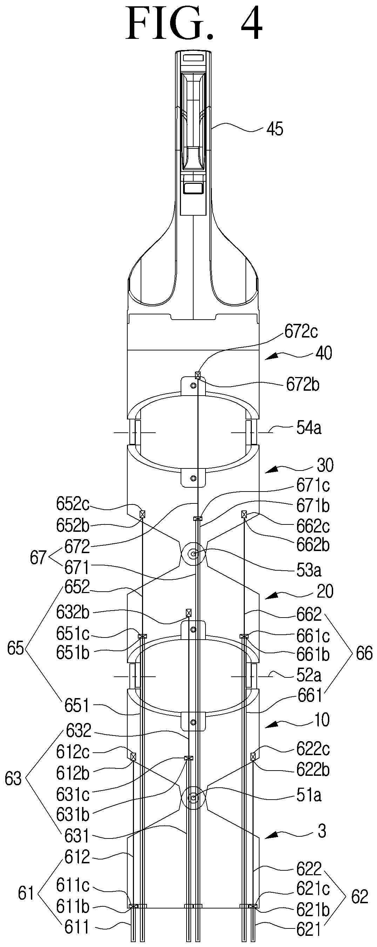

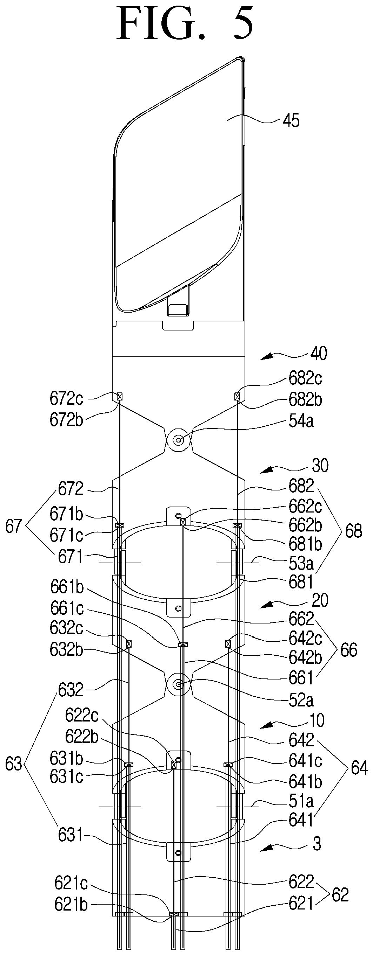

Hereinafter, the arrangement of the plurality of ring-shaped links 10, 20, 30, and 40 and the plurality of Borden cables 60 will be described with reference to FIGS. 4 and 5.

FIG 4 is a conceptual view for explaining arrangement of a plurality of Borden cables 60 of a manipulator 1 according to one or more embodiments of the disclosure. FIG 5 is a conceptual view of FIG 4 viewed from the top for explaining arrangement of the plurality of Borden cables 60 of a manipulator 1 according to one or more embodiments of the disclosure.

Referring to FIGS. 4 and 5, the plurality of Borden cables 60 may include first to eighth Borden cables 61 to 68.

A first Borden cable 61 and a second Borden cable 62 may be connected to the first ring-shaped link 10 so as to rotate the first ring-shaped link 10 at a predetermined angle.

The first Borden cable 61 may include a first flexible conduit 611 and a first wire 612.

One end of the first flexible conduit 611 may be connected to the driving device 80, and the other end 611b thereof may be connected to the base link 3.

The first wire 612 may be accommodated at least partially inside the first flexible conduit 611. One end of the first wire 612 may be connected to the driving device 80, and the other end 612b thereof may be fixed, directly or indirectly, to the first ring-shaped link 10. The other end 612b of the first wire 612 may protrude from the other end 611b of the first flexible conduit 611 fixed, directly or indirectly, to the base link 3, pass through the base link 3, and be fixed, directly or indirectly, to the first ring-shaped link 10. Accordingly, the first wire 612 is longer than the first flexible conduit 611.

The second Borden cable 62 may include a second flexible conduit 621 and a second wire 622.

One end of the second flexible conduit 621 may be connected to the driving device 80, and the other end 621b thereof may be connected to the base link 3. The other end 621b of the second flexible conduit 621 may be connected to the base link 3 opposite to the first flexible conduit 611 based on the rotation axis 51a of the first ring-shaped link 10.

The second wire 622 may be accommodated at least partially inside the second flexible conduit 621. One end of the second wire 622 may be connected to the driving device 80, and the other end 622b thereof may be fixed to the first ring-shaped link 10. The other end 622b of the second wire 622 may protrude from the other end 621b of the second flexible conduit 621 fixed to the base link 3, pass through the base link 3, and be fixed to the first ring-shaped link 10. Accordingly, the second wire 622 is longer than the second flexible conduit 621.

The other end 622b of the second wire 622 may be connected to the first ring-shaped link 10 opposite to the first wire 612 based on the rotation axis 51a of the first ring-shaped link 10. The other end 612b of the first wire 612 and the other end 622b of the second wire 622 may be fixed to the first ring-shaped link 10 so as to form approximately 90 degrees with respect to the rotation axis 51a of the first ring-shaped link 10.

A first wire fixing part 612c to which the other end 612b of the first wire 612 is fixed and a second wire fixing part 622c to which the other end 622b of the second wire 622 is fixed may be provided inside the first ring-shaped link 10. The first wire fixing part 612c and the second wire fixing part 622c may be disposed on the inner surface of the first ring-shaped link 10 so as to face each other. For example, the first wire fixing part 612c and the second wire fixing part 622c may be disposed on the inner circumferential surface of the first ring-shaped link 10 at intervals of approximately 180 degrees.

A first conduit fixing part 611c to which the other end 611b of the first flexible conduit 611 is fixed and a second conduit fixing part 621c to which the other end 621b of the second flexible conduit 621 is fixed may be provided inside the base link 3. The first conduit fixing part 611c and the second conduit fixing part 621c may be disposed inside the base link 3 so as to face each other. For example, the first conduit fixing part 611c and the second conduit fixing part 621c may be disposed inside the base link 3 at intervals of approximately 180 degrees.

Therefore, when the driving device 80 operates the first wire 612 and the second wire 622, the first ring-shaped link 10 may rotate in a clockwise direction or in a counter-clockwise direction around the rotation axis 51a of the first hinges 51.

A third Borden cable 63 and a fourth Borden cable 64 may be connected to the second ring-shaped link 20 so as to rotate the second ring-shaped link 20 at a predetermined angle.

The third Borden cable 63 may include a third flexible conduit 631 and a third wire 632.

One end of the third flexible conduit 631 may be connected to the driving device 80, and the other end 631b thereof may pass through the base link 3 and be connected to the first ring-shaped link 10.

The third wire 632 may be accommodated at least partially inside the third flexible conduit 631. One end of the third wire 632 may be connected to the driving device 80, and the other end 632b thereof may be fixed to the second ring-shaped link 20. The other end 632b of the third wire 632 may protrude from the other end 631b of the third flexible conduit 631 fixed to the first ring-shaped link 10, pass through the first ring-shaped link 10, and be fixed to the second ring-shaped link 20. Accordingly, the third wire 632 is longer than the third flexible conduit 631.

The fourth Borden cable 64 may include a fourth flexible conduit 641 and a fourth wire 642.

One end of the fourth flexible conduit 641 may be connected to the driving device 80, and the other end 641b thereof may pass through the base link 3 and be connected to the first ring-shaped link 10. The other end 641b of the fourth flexible conduit 641 may be connected to the first ring-shaped link 10 opposite to the third flexible conduit 631 based on the rotation axis 52a of the second ring-shaped link 20.

The fourth wire 642 may be accommodated at least partially inside the fourth flexible conduit 641. One end of the fourth wire 642 may be connected to the driving device 80, and the other end 642b thereof may be fixed to the second ring-shaped link 20. The other end 642b of the fourth wire 642 may protrude from the other end 641b of the fourth flexible conduit 641 fixed to the first ring-shaped link 10, pass through the first ring-shaped link 10, and be fixed to the second ring-shaped link 20. Accordingly, the fourth wire 642 is longer than the fourth flexible conduit 641.

The other end 642b of the fourth wire 642 may be fixed to the second ring-shaped link 20 opposite to the third wire 632 based on the rotation axis 52a of the second ring-shaped link 20. The other end 632b of the third wire 632 and the other end 642b of the fourth wire 642 may be fixed to the second ring-shaped link 20 so as to form approximately 90 degrees with respect to the rotation axis 52a of the second ring-shaped link 20.

A third wire fixing part 632c to which the other end 632b of the third wire 632 is fixed and a fourth wire fixing part 642c to which the other end 642b of the fourth wire 642 is fixed may be provided inside the second ring-shaped link 20. The third wire fixing part 632c and the fourth wire fixing part 642c may be disposed on the inner surface of the second ring-shaped link 20 so as to face each other. For example, the third wire fixing part 632c and the fourth wire fixing part 642c may be disposed on the inner circumferential surface of the second ring-shaped link 20 at intervals of approximately 180 degrees.

A third conduit fixing part 631c to which the other end 631b of the third flexible conduit 631 is fixed and a fourth conduit fixing part 641c to which the other end 641b of the fourth flexible conduit 641 is fixed may be provided inside the first ring-shaped link 10. The third conduit fixing part 631c and the fourth conduit fixing part 641c may be disposed inside the first ring-shaped link 10 so as to face each other. For example, the third conduit fixing part 631c and the fourth conduit fixing part 641c may be disposed inside the first ring-shaped link 10 at intervals of approximately 180 degrees.

Therefore, when the driving device 80 operates the third wire 632 and the fourth wire 642, the second ring-shaped link 20 may rotate in a clockwise direction or in a counter-clockwise direction around the rotation axis 52a of the second hinges 52. At this time, the third wire 632 and fourth wire 642 may rotate the second ring-shaped link 20 with respect to the first ring-shaped link 10 without interference with the first Borden cable 61 and the second Borden cable 62.

A fifth Borden cable 65 and a sixth Borden cable 66 may be connected to the third ring-shaped link 30 so as to rotate the third ring-shaped link 30 at a predetermined angle.

The fifth Borden cable 65 may include a fifth flexible conduit 651 and a fifth wire 652.

One end of the fifth flexible conduit 651 may be connected to the driving device 80, and the other end 651b thereof may pass through the base link 3 and the first ring-shaped link 10, and be connected to the second ring-shaped link 20.

The fifth wire 652 may be accommodated at least partially inside the fifth flexible conduit 651. One end of the fifth wire 652 may be connected, directly or indirectly, to the driving device 80, and the other end 652b thereof may be fixed to the third ring-shaped link 30. The other end 652b of the fifth wire 652 may protrude from the other end 651b of the fifth flexible conduit 651 fixed to the second ring-shaped link 20, pass through the second ring-shaped link 20, and be fixed to the third ring-shaped link 30. Accordingly, the fifth wire 652 is longer than the fifth flexible conduit 651.

The sixth Borden cable 66 may include a sixth flexible conduit 661 and a sixth wire 662.

One end of the sixth flexible conduit 661 may be connected to the driving device 80, and the other end 661b thereof may pass through the base link 3 and the first ring-shaped link 10, and be connected to the second ring-shaped link 20. The other end 661b of the sixth flexible conduit 661 may be connected to the second ring-shaped link 20 opposite to the fifth flexible conduit 651 based on the rotation axis 53a of the third ring-shaped link 30.

The sixth wire 662 may be accommodated at least partially inside the sixth flexible conduit 661. One end of the sixth wire 662 may be connected to the driving device 80, and the other end 662b thereof may be fixed to the third ring-shaped link 30. The other end 662b of the sixth wire 662 may protrude from the other end 661b of the sixth flexible conduit 661 fixed to the second ring-shaped link 20, pass through the second ring-shaped link 20, and be fixed to the third ring-shaped link 30. Accordingly, the sixth wire 662 is longer than the sixth flexible conduit 661.

The other end 662b of the sixth wire 662 may be fixed to the third ring-shaped link 30 opposite to the fifth wire 662 based on the rotation axis 53a of the third ring-shaped link 30. The other end 652b of the fifth wire 652 and the other end 662b of the sixth wire 662 may be fixed to the third ring-shaped link 30 so as to form approximately 90 degrees with respect to the rotation axis 53a of the third ring-shaped link 30.

A fifth wire fixing part 652c to which the other end 652b of the fifth wire 652 is fixed and a sixth wire fixing part 662c to which the other end 662b of the sixth wire 662 is fixed may be provided inside the third ring-shaped link 30. The fifth wire fixing part 652c and the sixth wire fixing part 662c may be disposed on the inner surface of the third ring-shaped link 30 so as to face each other. For example, the fifth wire fixing part 652c and the sixth wire fixing part 662c may be disposed on the inner circumferential surface of the third ring-shaped link 30 at intervals of approximately 180 degrees.

A fifth conduit fixing part 651c to which the other end 651b of the fifth flexible conduit 651 is fixed and a sixth conduit fixing part 661c to which the other end 661b of the sixth flexible conduit 661 is fixed may be provided inside the second ring-shaped link 20. The fifth conduit fixing part 651c and the sixth conduit fixing part 661c may be disposed inside the second ring-shaped link 20 so as to face each other. For example, the fifth conduit fixing part 651c and the sixth conduit fixing part 661c may be disposed inside the second ring-shaped link 20 at intervals of approximately 180 degrees.

Therefore, when the driving device 80 operates the fifth wire 652 and the sixth wire 662, the third ring-shaped link 30 may rotate in a clockwise direction or in a counter-clockwise direction around the rotation axis 53a of the third hinges 53. At this time, the fifth wire 652 and sixth wire 662 may rotate the third ring-shaped link 30 with respect to the second ring-shaped link 20 without interference with the first Borden cable 61, the second Borden cable 62, the third Borden cable 63, and the fourth Borden cable 64.

A seventh Borden cable 67 and an eighth Borden cable 68 may be connected to the fourth ring-shaped link 40 so as to rotate the fourth ring-shaped link 40 at a predetermined angle.

The seventh Borden cable 67 may include a seventh flexible conduit 671 and a seventh wire 672.

One end of the seventh flexible conduit 671 may be connected to the driving device 80, and the other end 671b thereof may pass through the base link 3, the first ring-shaped link 10, and the second ring-shaped link 20, and be connected to the third ring-shaped link 30.

The seventh wire 672 may be accommodated at least partially inside the seventh flexible conduit 671. One end of the seventh wire 672 may be connected to the driving device 80, and the other end 672b thereof may be fixed to the fourth ring-shaped link 40. The other end 672b of the seventh wire 672 may protrude from the other end 671b of the seventh flexible conduit 671 fixed to the third ring-shaped link 30, pass through the third ring-shaped link 30, and be fixed to the fourth ring-shaped link 40. Accordingly, the seventh wire 672 is longer than the seventh flexible conduit 671.

The eighth Borden cable 68 may include an eighth flexible conduit 681 and a eighth wire 682.

One end of the eighth flexible conduit 681 may be connected to the driving device 80, and the other end 681b thereof may pass through the base link 3, the first ring-shaped link 10, and the second ring-shaped link 20, and be connected to the third ring-shaped link 30. The other end 681b of the eighth flexible conduit 681 may be connected to the third ring-shaped link 30 opposite to the seventh flexible conduit 671 based on the rotation axis 53a of the third ring-shaped link 30.

The eighth wire 682 may be accommodated at least partially inside the eighth flexible conduit 681. One end of the eighth wire 682 may be connected to the driving device 80, and the other end 682b thereof may be fixed to the fourth ring-shaped link 40. The other end 682b of the eighth wire 682 may protrude from the other end 681b of the eighth flexible conduit 681 fixed to the third ring-shaped link 30, pass through the third ring-shaped link 30, and be fixed to the fourth ring-shaped link 40. Accordingly, the eighth wire 682 is longer than the eighth flexible conduit 681.

The other end 682b of the eighth wire 682 may be fixed to the fourth ring-shaped link 40 opposite to the seventh wire 672 based on the rotation axis 54a of the fourth ring-shaped link 40. The other end 672b of the seventh wire 672 and the other end 682b of the eighth wire 682 may be fixed to the fourth ring-shaped link 40 so as to form approximately 90 degrees with respect to the rotation axis 54a of the fourth ring-shaped link 40.

A seventh wire fixing part 672c to which the other end 672b of the seventh wire 672 is fixed and an eighth wire fixing part 682c to which the other end 682b of the eighth wire 682 is fixed may be provided inside the fourth ring-shaped link 40. The seventh wire fixing part 672c and the eighth wire fixing part 682c may be disposed on the inner surface of the fourth ring-shaped link 40 so as to face each other. For example, the seventh wire fixing part 672c and the eighth wire fixing part 682c may be disposed on the inner circumferential surface of the fourth ring-shaped link 40 at intervals of approximately 180 degrees.

A seventh conduit fixing part 671c to which the other end 671b of the seventh flexible conduit 671 is fixed and an eighth conduit fixing part 681c to which the other end 681b of the eighth flexible conduit 681 is fixed may be provided inside the third ring-shaped link 30. The seventh conduit fixing part 671c and the eighth conduit fixing part 681c may be disposed inside the third ring-shaped link 30 so as to face each other. For example, the seventh conduit fixing part 671c and the eighth conduit fixing part 681c may be disposed inside the third ring-shaped link 30 at intervals of approximately 180 degrees.

Therefore, when the driving device 80 operates the seventh wire 672 and the eighth wire 682, the fourth ring-shaped link 40 may rotate in a clockwise direction or in a counter-clockwise direction around the rotation axis 54a of the fourth hinges 54. At this time, the seventh wire 672 and the eighth wire 682 may rotate the fourth ring-shaped link 40 with respect to the third ring-shaped link 30 without interference with the first Borden cable 61, the second Borden cable 62, the third Borden cable 63, the fourth Borden cable 64, the fifth Borden cable 65, and the sixth Borden cable 66.

In the above, the structure in which the flexible conduit is fixed to the ring-shaped link immediately below the ring-shaped link driven by the wires has been described. However, this disclosure is not limited thereto. In this disclosure, for convenience of assembly, the other ends of the plurality of wires may be fixed close to the fourth ring-shaped link, and the other ends of the plurality of flexible conduits may be fixed close to the base link.

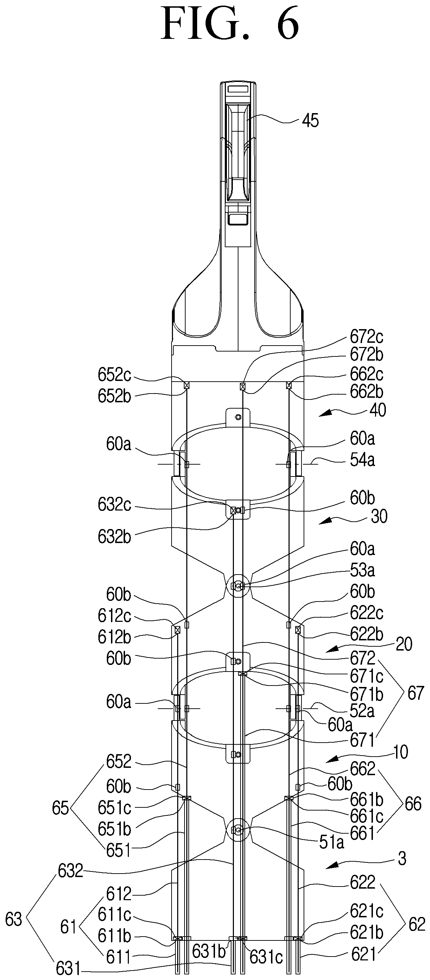

FIG 6 is a conceptual view for explaining another example of arrangement of a plurality of Borden cables 60 of a manipulator 1 according to one or more embodiments of the disclosure.

Referring to FIG 6, the first Borden cable 61 and the second Borden cable 62 may be connected to the first ring-shaped link 10 so as to rotate the first ring-shaped link 10 at a predetermined angle.

The first Borden cable 61 may include a first flexible conduit 611 and a first wire 612.

One end of the first flexible conduit 611 may be connected to the driving device 80, and the other end 611b thereof may be fixed to the base link 3.

The first wire 612 may be accommodated inside the first flexible conduit 611. One end of the first wire 612 may be connected to the driving device 80, and the other end 612b thereof may be fixed to an upper portion of the second ring-shaped link 20. The other end 612b of the first wire 612 may protrude from the other end 611b of the first flexible conduit 611 fixed to the base link 3, pass through the base link 3 and the first ring-shaped link 10, and be fixed to the second ring-shaped link 20.

At this time, the first wire 612 may pass through a wire holder 60a disposed on the rear surface of the second hinge 52 connecting the first ring-shaped link 10 and the second ring-shaped link 20, and be fixed to the second ring-shaped link 20. A wire guide 60b for supporting the first wire 612 may be disposed on the inner surface of the first ring-shaped link 10.

Referring to FIG 3, the wire holder 60a may be formed in a hollow cylindrical shape and may be fixed to the inner surface of the hinge plate 521. The first wire 612 may be disposed to pass through the hole 60a1 of the wire holder 60a. The wire guide 60b is disposed on the inner surface of the first ring-shaped link 10 and may include a plurality of wire guide holes 60b1 formed in the longitudinal direction of the first ring-shaped link 10. The first wire 612 may be disposed to pass through one of the plurality of wire guide holes 60b1 of the wire guide 60b.

The second Borden cable 62 may include a second flexible conduit 621 and a second wire 622.

One end of the second flexible conduit 621 may be connected to the driving device 80, and the other end 621b thereof may be connected to the base link 3. The other end 621b of the second flexible conduit 621 may be connected to the base link 3 opposite to the first flexible conduit 611 based on the rotation axis 51a of the first ring-shaped link 10.

The second wire 622 may be accommodated inside the second flexible conduit 621. One end of the second wire 622 may be connected to the driving device 80, and the other end 622b thereof may be fixed to an upper portion of the second ring-shaped link 20. The other end 622b of the second wire 622 may protrude from the other end 621b of the second flexible conduit 621 fixed to the base link 3, pass through the base link 3 and the first ring-shaped link 10, and be fixed to the second ring-shaped link 20.

At this time, the second wire 622 may pass through the wire holder 60a disposed on the rear surface of the second hinge 52 connecting the first ring-shaped link 10 and the second ring-shaped link 20, and be fixed to the second ring-shaped link 20. A wire guide 60b for supporting the second wire 622 may be disposed on the inner surface of the first ring-shaped link 10.

The other end 622b of the second wire 622 may be fixed to the second ring-shaped link 20 opposite to the first wire 612 based on the rotation axis 51a of the first ring-shaped link 10. The other end 612b of the first wire 612 and the other end 622b of the second wire 622 may be fixed to the second ring-shaped link 20 so as to form approximately 90 degrees with respect to the rotation axis 51a of the first ring-shaped link 10.

The first wire fixing part 612c to which the other end 612b of the first wire 612 is fixed and the second wire fixing part 622c to which the other end 622b of the second wire 622 is fixed may be provided at the upper portion of the second ring-shaped link 20. The first wire fixing part 612c and the second wire fixing part 622c may be disposed on the upper portion of the second ring-shaped link 20 so as to face each other. For example, the first wire fixing part 612c and the second wire fixing part 622c may be disposed on the upper portion of the second ring-shaped link 20 at intervals of approximately 180 degrees.

The first conduit fixing part 611c to which the other end 611b of the first flexible conduit 611 is fixed and the second conduit fixing part 621c to which the other end 621b of the second flexible conduit 621 is fixed may be provided inside the base link 3. The first conduit fixing part 611c and the second conduit fixing part 621c may be disposed inside the base link 3 so as to face each other. For example, the first conduit fixing part 611c and the second conduit fixing part 621c may be disposed inside the base link 3 at intervals of approximately 180 degrees.

Therefore, when the driving device 80 operates the first wire 612 and the second wire 622, the first ring-shaped link 10 may rotate in a clockwise direction or in a counter-clockwise direction around the rotation axis 51a of the first hinges 51. At this time, because the pair of second hinges 52 connecting the first ring-shaped link 10 and the second ring-shaped link 20 are disposed at approximately 90 degrees with the pair of first hinges 51 connecting the first ring-shaped link 10 and the base link 3, when the first ring-shaped link 10 rotates with respect to the base link 3, the second ring-shaped link 20 may rotate with respect to the base link 3 integrally with the first ring-shaped link 10. In other words, the second ring-shaped link 20 does not rotate with respect to the first ring-shaped link 10 by the first wire 612 and the second wire 622.

The third Borden cable 63 and the fourth Borden cable 64 may be connected to the second ring-shaped link 20 so as to rotate the second ring-shaped link 20 at a predetermined angle.

The third Borden cable 63 may include a third flexible conduit 631 and a third wire 632.

One end of the third flexible conduit 631 may be connected to the driving device 80, and the other end 631b thereof may be fixed to the base link 3.

The third wire 632 may be accommodated inside the third flexible conduit 631. One end of the third wire 632 may be connected to the driving device 80, and the other end 632b thereof may be fixed to the upper portion of the third ring-shaped link 30. The other end 632b of the third wire 632 may protrude from the other end 631b of the third flexible conduit 631 fixed to the base link 3, pass through the first ring-shaped link 10 and the second ring-shaped link 20, and be fixed to the upper portion of the third ring-shaped link 30.

At this time, the third wire 632 may pass through the wire holder 60a disposed on the rear surface of the third hinge 53 connecting the second ring-shaped link 20 and the third ring-shaped link 30, and be fixed to the third ring-shaped link 30. The wire guide 60b for supporting the third wire 632 may be disposed on the inner surfaces of the first ring-shaped link 10 and the second ring-shaped link 20.

The fourth Borden cable 64 may include a fourth flexible conduit 641 and a fourth wire 642.

One end of the fourth flexible conduit 641 may be connected to the driving device 80, and the other end 641b thereof may be connected to the base link 3. The other end 641b of the fourth flexible conduit 641 may be fixed to the base link 3 opposite to the third flexible conduit 631 based on the rotation axis 52a of the second ring-shaped link 20.

The fourth wire 642 may be accommodated inside the fourth flexible conduit 641. One end of the fourth wire 642 may be connected to the driving device 80, and the other end 642b thereof may be fixed to the upper portion of the third ring-shaped link 30. The other end 642b of the fourth wire 642 may protrude from the other end 641b of the fourth flexible conduit 641 fixed to the base link 3, pass through the first ring-shaped link 10 and the second ring-shaped link 20, and be fixed to the upper portion of the third ring-shaped link 30.

The other end 642b of the fourth wire 642 may be fixed to the third ring-shaped link 30 opposite to the third wire 632 based on the rotation axis 52a of the second ring-shaped link 20. The other end 632b of the third wire 632 and the other end 642b of the fourth wire 642 may be fixed to the third ring-shaped link 30 so as to form approximately 90 degrees with respect to the rotation axis 52a of the second ring-shaped link 20.

The third wire fixing part 632c to which the other end 632b of the third wire 632 is fixed and the fourth wire fixing part 642c to which the other end 642b of the fourth wire 642 is fixed may be provided at the upper portion of the third ring-shaped link 30. The third wire fixing part 632c and the fourth wire fixing part 642c may be disposed on the upper portion of the third ring-shaped link 30 so as to face each other. For example, the third wire fixing part 632c and the fourth wire fixing part 642c may be disposed on the upper portion of the third ring-shaped link 30 at intervals of approximately 180 degrees.

At this time, the fourth wire 622 may pass through the wire holder 60a disposed on the rear surface of the third hinge 53 connecting the second ring-shaped link 20 and the third ring-shaped link 30, and be fixed to the third ring-shaped link 30. The wire guide 60b for supporting the fourth wire 642 may be disposed on the inner surfaces of the first ring-shaped link 10 and the second ring-shaped link 20.

The third conduit fixing part 631c to which the other end 631b of the third flexible conduit 631 is fixed and the fourth conduit fixing part 641c to which the other end 641b of the fourth flexible conduit 641 is fixed may be provided inside the base link 3. The third conduit fixing part 631c and the fourth conduit fixing part 641c may be disposed inside the base link 3 so as to face each other. For example, the third conduit fixing part 631c and the fourth conduit fixing part 641c may be disposed inside the base link 3 at intervals of approximately 180 degrees.

Therefore, when the driving device 80 operates the third wire 632 and the fourth wire 642, the second ring-shaped link 20 may rotate in a clockwise direction or in a counter-clockwise direction around the rotation axis 52a of the second hinges 52. At this time, because the pair of third hinges 53 connecting the second ring-shaped link 20 and the third ring-shaped link 30 are disposed at approximately 90 degrees with the pair of second hinges 52 connecting the first ring-shaped link 10 and the second ring-shaped link 20, when the second ring-shaped link 20 rotates with respect to the first ring-shaped link 10, the third ring-shaped link 30 may rotate with respect to the first ring-shaped link 10 integrally with the second ring-shaped link 20. In other words, the third ring-shaped link 30 does not rotate with respect to the second ring-shaped link 20 by the third wire 632 and the fourth wire 642.

The fifth Borden cable 65 and the sixth Borden cable 66 may be connected to the fourth ring-shaped link 40 so as to rotate the third ring-shaped link 30 at a predetermined angle.

The fifth Borden cable 65 may include a fifth flexible conduit 651 and a fifth wire 652.

One end of the fifth flexible conduit 651 may be connected to the driving device 80, and the other end 651b thereof may pass through the base link 3 and be connected to the lower portion of the first ring-shaped link 10.

The fifth wire 652 may be accommodated inside the fifth flexible conduit 651. One end of the fifth wire 652 may be connected to the driving device 80, and the other end 652b thereof may be fixed to the fourth ring-shaped link 40. The other end 652b of the fifth wire 652 may protrude from the other end 651b of the fifth flexible conduit 651 fixed to the first ring-shaped link 10, pass through the second ring-shaped link 20 and the third ring-shaped link 30, and be fixed to the upper portion of the fourth ring-shaped link 40.

At this time, the fifth wire 652 may pass through the wire holders 60a disposed on the rear surfaces of the second hinge 52 and the fourth hinge 54, and be fixed to the fourth ring-shaped link 40. The wire guides 60b for supporting the fifth wire 652 may be disposed on the inner surfaces of the first ring-shaped link 10, the second ring-shaped link 20, and the third ring-shaped link 30.

The sixth Borden cable 66 may include a sixth flexible conduit 661 and a sixth wire 662.

One end of the sixth flexible conduit 661 may be connected to the driving device 80, and the other end 661b thereof may pass through the base link 3 and be connected to the lower portion of the first ring-shaped link 10. The other end 661b of the sixth flexible conduit 661 may be connected to the first ring-shaped link 10 opposite to the fifth flexible conduit 651 based on the rotation axis 53a of the third ring-shaped link 30.

The sixth wire 662 may be accommodated inside the sixth flexible conduit 661. One end of the sixth wire 662 may be connected to the driving device 80, and the other end 662b thereof may be fixed to the fourth ring-shaped link 40. The other end 662b of the sixth wire 662 may protrude from the other end 661b of the sixth flexible conduit 661 fixed to the first ring-shaped link 10, pass through the second ring-shaped link 20 and the third ring-shaped link 30, and be fixed to the fourth ring-shaped link 40.

The other end 662b of the sixth wire 662 may be fixed to the fourth ring-shaped link 40 opposite to the fifth wire 662 based on the rotation axis 53a of the third ring-shaped link 30. The other end 652b of the fifth wire 652 and the other end 662b of the sixth wire 662 may be fixed to the fourth ring-shaped link 40 so as to form approximately 90 degrees with respect to the rotation axis 53a of the third ring-shaped link 30.

At this time, the sixth wire 662 may pass through the wire holders 60a disposed on the rear surfaces of the second hinge 52 and the fourth hinge 54, and be fixed to the fourth ring-shaped link 40. The wire guides 60b for supporting and guiding the movement of the sixth wire 662 may be disposed on the inner surfaces of the first ring-shaped link 10, the second ring-shaped link 20, and the third ring-shaped link 30.

The fifth wire fixing part 652c to which the other end 652b of the fifth wire 652 is fixed and the sixth wire fixing part 662c to which the other end 662b of the sixth wire 662 is fixed may be provided at the upper portion of the fourth ring-shaped link 40. The fifth wire fixing part 652c and the sixth wire fixing part 662c may be disposed on the inner surface of the fourth ring-shaped link 40 so as to face each other. For example, the fifth wire fixing part 652c and the sixth wire fixing part 662c may be disposed on the upper portion of the fourth ring-shaped link 40 at intervals of approximately 180 degrees.

The fifth conduit fixing part 651c to which the other end 651b of the fifth flexible conduit 651 is fixed and the sixth conduit fixing part 661c to which the other end 661b of the sixth flexible conduit 661 is fixed may be provided at the lower portion of the first ring-shaped link 10. The fifth conduit fixing part 651c and the sixth conduit fixing part 661c may be disposed at the lower portion of the first ring-shaped link 10 so as to face each other. For example, the fifth conduit fixing part 651c and the sixth conduit fixing part 661c may be disposed at the lower portion of the first ring-shaped link 10 at intervals of approximately 180 degrees.

Therefore, when the driving device 80 operates the fifth wire 652 and the sixth wire 662, the third ring-shaped link 30 may rotate in a clockwise direction or in a counter-clockwise direction around the rotation axis 53a of the third hinges 53. At this time, because the pair of fourth hinges 54 connecting the third ring-shaped link 30 and the fourth ring-shaped link 40 are disposed at approximately 90 degrees with the pair of third hinges 53 connecting the second ring-shaped link 20 and the third ring-shaped link 30, when the third ring-shaped link 30 rotates with respect to the second ring-shaped link 20, the fourth ring-shaped link 40 may rotate with respect to the second ring-shaped link 20 integrally with the third ring-shaped link 30. In other words, the fourth ring-shaped link 40 does not rotate with respect to the third ring-shaped link 30 by the fifth wire 652 and the sixth wire 662.

The seventh Borden cable 67 and the eighth Borden cable 68 may be connected to the fourth ring-shaped link 40 so as to rotate the fourth ring-shaped link 40 at a predetermined angle.

The seventh Borden cable 67 may include a seventh flexible conduit 671 and a seventh wire 672.

One end of the seventh flexible conduit 671 may be connected to the driving device 80, and the other end 671b thereof may pass through the base link 3 and the first ring-shaped link 10, and be connected to the lower portion of the second ring-shaped link 20.

The seventh wire 672 may be accommodated inside the seventh flexible conduit 671. One end of the seventh wire 672 may be connected to the driving device 80, and the other end 672b thereof may be fixed to the fourth ring-shaped link 40. The other end 672b of the seventh wire 672 may protrude from the other end 671b of the seventh flexible conduit 671 fixed to the lower portion of the second ring-shaped link 20, pass through the second ring-shaped link 20 and the third ring-shaped link 30, and be fixed to the upper portion of the fourth ring-shaped link 40.

At this time, the seventh wire 672 may pass through the wire holders 60a disposed on the rear surfaces of the third hinge 53, and be fixed to the fourth ring-shaped link 40. The wire guide 60b for supporting the seventh wire 672 may be disposed on the inner surface of the third ring-shaped link 30.

The eighth Borden cable 68 may include an eighth flexible conduit 681 and an eighth wire 682.

One end of the eighth flexible conduit 681 may be connected to the driving device 80, and the other end 681b thereof may pass through the base link 3 and the first ring-shaped link 10, and be connected to the lower portion of the second ring-shaped link 20. The other end 681b of the eighth flexible conduit 681 may be connected to the lower portion of the second ring-shaped link 20 opposite to the seventh flexible conduit 671 based on the rotation axis 53a of the third ring-shaped link 30.

The eighth wire 682 may be accommodated inside the eighth flexible conduit 681. One end of the eighth wire 682 may be connected to the driving device 80, and the other end 682b thereof may be fixed to the upper portion of the fourth ring-shaped link 40. The other end 682b of the eighth wire 682 may protrude from the other end 681b of the eighth flexible conduit 681 fixed to the lower portion of the second ring-shaped link 20, pass through the second ring-shaped link 20 and the third ring-shaped link 30, and be fixed to the fourth ring-shaped link 40.

At this time, the eighth wire 682 may pass through the wire holders 60a disposed on the rear surfaces of the third hinge 53, and be fixed to the fourth ring-shaped link 40. The wire guide 60b for supporting and guiding the eighth wire 682 may be disposed on the inner surface of the third ring-shaped link 30.

The other end 682b of the eighth wire 682 may be fixed to the fourth ring-shaped link 40 opposite to the seventh wire 672 based on the rotation axis 54a of the fourth ring-shaped link 40. The other end 672b of the seventh wire 672 and the other end 682b of the eighth wire 682 may be fixed to the fourth ring-shaped link 40 so as to form approximately 90 degrees with respect to the rotation axis 54a of the fourth ring-shaped link 40.

The seventh wire fixing part 672c to which the other end 672b of the seventh wire 672 is fixed and the eighth wire fixing part 682c to which the other end 682b of the eighth wire 682 is fixed may be provided at the upper portion of the fourth ring-shaped link 40. The seventh wire fixing part 672c and the eighth wire fixing part 682c may be disposed on the upper portion of the fourth ring-shaped link 40 so as to face each other. For example, the seventh wire fixing part 672c and the eighth wire fixing part 682c may be disposed on the upper portion of the fourth ring-shaped link 40 at intervals of approximately 180 degrees.

The seventh conduit fixing part 671c to which the other end 671b of the seventh flexible conduit 671 is fixed and the eighth conduit fixing part 681c to which the other end 681b of the eighth flexible conduit 681 is fixed may be provided at the lower portion of the second ring-shaped link 20. The seventh conduit fixing part 671c and the eighth conduit fixing part 681c may be disposed at the lower portion of the second ring-shaped link 20 so as to face each other. For example, the seventh conduit fixing part 671c and the eighth conduit fixing part 681c may be disposed at the lower portion of the second ring-shaped link 20 at intervals of approximately 180 degrees.

Therefore, when the driving device 80 operates the seventh wire 672 and the eighth wire 682, the fourth ring-shaped link 40 may rotate in a clockwise direction or in a counter-clockwise direction around the rotation axis 54a of the fourth hinges 54. At this time, the seventh wire 672 and eighth wire 682 may rotate the fourth ring-shaped link 40 with respect to the third ring-shaped link 30 without interference with the first Borden cable 61, the second Borden cable 62, the third Borden cable 63, the fourth Borden cable 64, the fifth Borden cable 65, and the sixth Borden cable 66.

The driving device 80 may be configured to operate the first to eighth Borden cables 61 to 68. The driving device 80 may include a plurality of motor assemblies to operate the first to eighth Borden cables 61 to 68.

For example, the driving device 80 may include a first motor assembly 81 configured to operate the first Borden cable 61 and the second Borden cable 62, a second motor assembly 82 configured to operate the third Borden cable 63 and the fourth Borden cable 64, a third motor assembly 83 configured to operate the fifth Borden cable 65 and the sixth Borden cable 66, and a fourth motor assembly 84 configured to operate the seventh Borden cable 67 and the eighth Borden cable 68. In other words, one motor assembly may operate two Borden cables antagonistically.

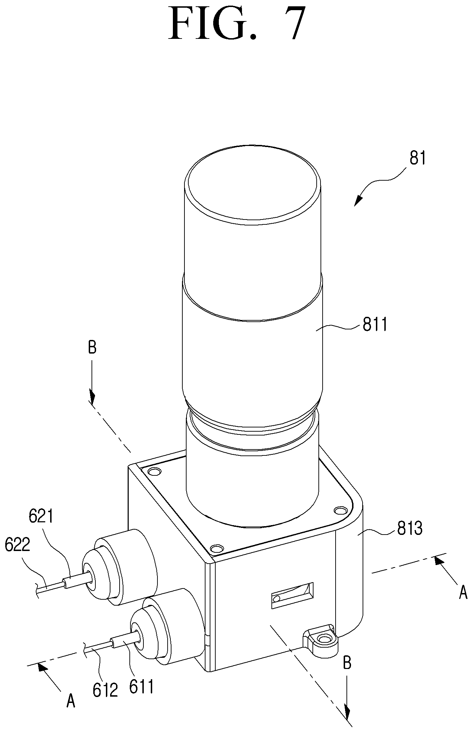

The first to fourth motor assemblies 81 to 84 are configured with the same structure. Therefore, the first motor assembly 81 will be described in detail below with reference to FIGS. 7 to 9. Hereinafter, for convenience of explanation, the first motor assembly 81 may be referred to as a motor assembly.

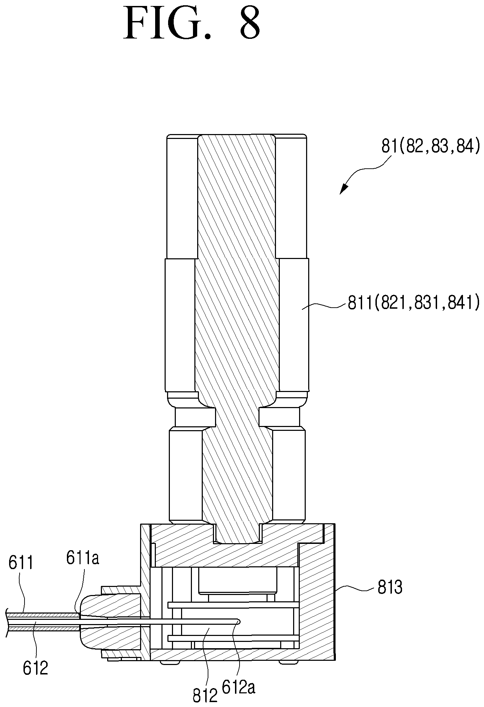

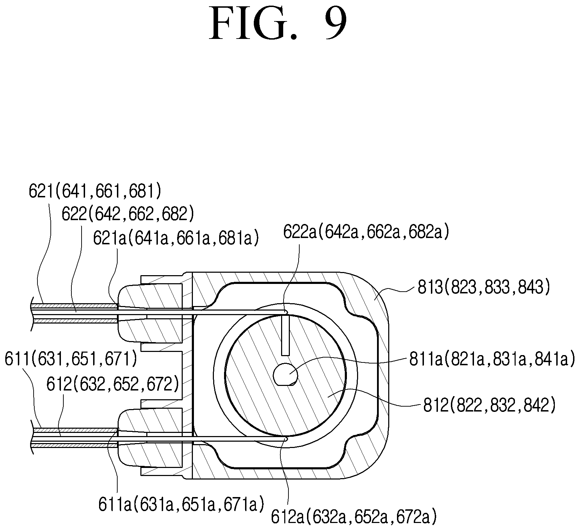

FIG 7 is a perspective view illustrating a motor assembly used in the manipulator 1 of FIG 1. FIG 8 is a cross-sectional view illustrating the motor assembly of FIG 7 taken along line A-A. FIG 9 is a cross-sectional view illustrating the motor assembly of FIG 7 taken along line B-B.

Referring to FIGS. 7 to 9, the motor assembly 81 may include a motor 811, a drum 812, and a case 813.

The motor 811 is formed to generate rotational force and may include a motor shaft 811a capable of rotating in both directions. Accordingly, the motor shaft 811a may rotate in a clockwise direction or in a counter-clockwise direction.

The drum 812 is disposed on the motor shaft 811a and may rotate integrally with the motor shaft 811a. The drum 812 may be formed in a cylindrical shape, and one ends of the pair of wires may be fixed to the outer circumferential surface of the drum 812. One ends of the pair of wires may be fixed to the outer circumferential surface of the drum 812 at approximately 180 degrees apart.

The case 813 may be formed to support the motor 811. The drum 812 disposed on the motor shaft 811a may be accommodated inside the case 813. One surface of the case 813 may be provided with two wire holes through which the pair of wires fixed to the drum 812 pass. One end of the flexible conduit may be coupled to each of the two wire holes.

When the drum 812 is rotated in one direction by the motor shaft 811a, one wire of the pair of wires is pulled and wound around the drum 812, and the other wire of the pair of wires is pushed in the opposite direction. When the drum 812 rotates in the opposite direction, the other wire of the pair of wires is pulled and wound around the drum 812, and one wire of the pair of wires is unwound from the drum 812 and pushes in the opposite direction. In other words, the motor 811 may operate the pair of wires antagonistically.

For example, one end 612a of the first wire 612 and one end 622a of the second wire 622 may be fixed to the outer circumferential surface of the first drum 812 integrally disposed on the first motor shaft 811a of the first motor 811 while being spaced apart by approximately 180 degrees. One end 611a of the first flexible conduit 611 and one end 622a of the second flexible conduit 621 may be coupled to the two wire holes of the first case 813. The first wire 612 has one end 612a fixed to the first drum 812 through the first flexible conduit 611, and the second wire 622 has one end 622a fixed to the first drum 812 through the second flexible conduit 621.

Therefore, when the first drum 812 is rotated in one direction by the first motor shaft 811a, the first wire 612 moving along the first flexible conduit 611 is wound around the outer circumferential surface of the first drum 812, and the second wire 622 is pushed by the first drum 812 and moves in the opposite direction to the first wire 612 along the second flexible conduit 621.

One end 632a of the third wire 632 and one end 642a of the fourth wire 642 may be fixed to the outer circumferential surface of the second drum 822 integrally disposed on the second motor shaft 821a of the second motor 821 while being spaced apart by approximately 180 degrees. One end 631a of the third flexible conduit 631 and one end 641a of the fourth flexible conduit 641 may be coupled to the two wire holes of the second case 823. The third wire 632 may be fixed to the second drum 822 through the third flexible conduit 631, and the fourth wire 642 may be fixed to the second drum 822 through the fourth flexible conduit 641.

Therefore, when the second drum 822 is rotated in one direction by the second motor shaft 821a, the third wire 632 moving along the third flexible conduit 631 is wound around the outer circumferential surface of the second drum 822, and the fourth wire 642 is pushed by the second drum 822 and moves in the opposite direction to the third wire 632 along the fourth flexible conduit 641.

One end 652a of the fifth wire 652 and one end 662a of the sixth wire 662 may be fixed to the outer circumferential surface of the third drum 832 integrally disposed on the third motor shaft 831a of the third motor 831 while being spaced apart by approximately 180 degrees. One end 651a of the fifth flexible conduit 651 and one end 661a of the sixth flexible conduit 661 may be coupled to the two wire holes of the third case 833. The fifth wire 652 may be fixed to the third drum 832 through the fifth flexible conduit 651, and the sixth wire 662 may be fixed to the third drum 832 through the sixth flexible conduit 661.

Therefore, when the third drum 832 is rotated in one direction by the third motor shaft 831a, the fifth wire 652 moving along the fifth flexible conduit 651 is wound around the outer circumferential surface of the third drum 832, and the sixth wire 662 is pushed by the third drum 832 and moves in the opposite direction to the fifth wire 652 along the sixth flexible conduit 661.

One end 672a of the seventh wire 672 and one end 682a of the eighth wire 682 may be fixed to the outer circumferential surface of the fourth drum 842 integrally disposed on the fourth motor shaft 841a of the fourth motor 841 while being spaced apart by approximately 180 degrees. One end 671a of the seventh flexible conduit 671 and one end 681a of the eighth flexible conduit 681 may be coupled to the two wire holes of the fourth case 843. The seventh wire 672 may be fixed to the fourth drum 842 through the seventh flexible conduit 671, and the eighth wire 682 may be fixed to the fourth drum 842 through the eighth flexible conduit 681.

Therefore, when the fourth drum 842 is rotated in one direction by the fourth motor shaft 841a, the seventh wire 672 moving along the seventh flexible conduit 671 is wound around the outer circumferential surface of the fourth drum 842, and the eighth wire 682 is pushed by the fourth drum 842 and moves in the opposite direction to the seventh wire 672 along the eighth flexible conduit 681.

The Borden cables 60 may include a tension adjuster for adjusting the tension of the wire.

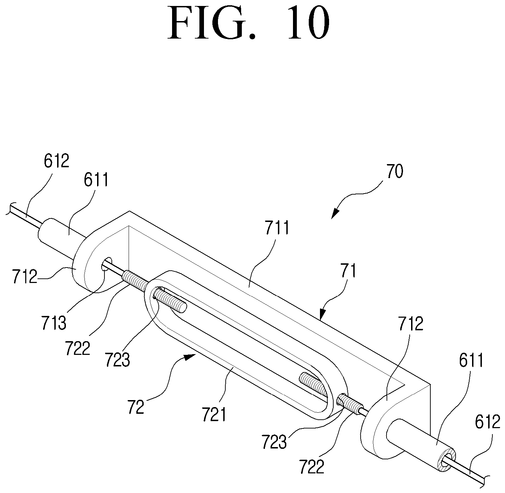

FIG 10 is a perspective view illustrating a tension adjuster 70 used in a manipulator 1 according to one or more embodiments of the disclosure.

Referring to FIG 10, a tension adjuster 70 may include a fixing bracket 71 and an adjuster unit 72.

The fixing bracket 71 may be formed in a U-shape with a substantially flat bottom. The fixing bracket 71 may include a fixing plate 711 and a pair of support plates 712 extending vertically from both ends of the fixing plate 711. Each of the pair of support plates 712 may be provided with a fixing hole 713. The flexible conduit 611 may be fixed to the fixing hole 713.

The adjuster unit 72 is formed to adjust the tension of the wire 612. The adjuster unit 72 may include a rotation part 721 and a pair of bolts 722 coupled to both ends of the rotation part 721. A pair of female screws 723 into which the pair of bolts 722 are fastened may be provided at both ends of the rotation part 721.

The rotation part 721 may be formed in a substantially track shape or an elliptical shape. One end of the wire 612 may be coupled to one end of each of the pair of bolts 722. Therefore, in a state in which the wire 612 is coupled to the pair of bolts 722 fastened to the female screws 723 of the rotation part 721, when the rotation part 721 is rotated, the tension of the wire 612 may be adjusted.

The length of the adjuster unit 72 may be smaller than the distance between the pair of support plates 712 of the fixing bracket 71. When the wire 612 is moved inside the flexible conduit 611 by the driving device 80, the adjuster unit 72 moves together with the wire 612. Therefore, the length of the adjuster unit 72 and the distance between the pair of support plates 712 may be defined so as not to interfere with the movement of the wire 612.

FIG 10 illustrates a state in which the tension adjuster 70 is disposed in the first Borden cable 61 as an example. However, as illustrated in FIG 1, the same tension adjusters 70 may be disposed in the second to eighth Borden cables 62 to 68. The fixing bracket 71 of the tension adjuster 70 may be fixed to the base 5.

In the above description, with reference to FIGS. 1, 2, 4, 5, and 6, three ring-shaped links 10, 20, and 30 are disposed between the base link 3 and the fourth ring-shaped link 40. However, the manipulator 1 according to the disclosure is not limited thereto.

As an example, the manipulator 1 according to one or more embodiments of the disclosure may include only one ring-shaped link 10 between the base link 3 and the fourth ring-shaped link 40. In other words, the manipulator 1 may include two ring-shaped links 10 and 40. When the manipulator 1 includes two ring-shaped links 10 and 40, the two ring-shaped links 10 and 40 may be operated using four Borden cables 60 and two motor assemblies.

As another example, the manipulator 1 according to one or more embodiments of the disclosure may include two ring-shaped links 10 and 20 between the base link 3 and the fourth ring-shaped link 40. In other words, the manipulator 1 may include three ring-shaped links 10, 20, and 40. When the manipulator 1 includes three ring-shaped links 10, 20, and 40, the three ring-shaped links 10, 20, and 40 may be operated using six Borden cables 60 and three motor assemblies.

As another example, the manipulator 1 according to one or more embodiments of the disclosure may include four or more ring-shaped links between the base link 3 and the fourth ring-shaped link 40. In other words, the manipulator 1 may include five or more ring-shaped links. When the manipulator 1 includes five or more ring-shaped links, the five or more ring-shaped links may be operated using Borden cables twice as many as the number of ring-shaped links and five or more motor assemblies.

In the above, the driving device 80 formed so that one motor operates one ring-shaped link has been described. However, the driving device 80 of the disclosure is not limited thereto. For example, the driving device 80 may be configured to such that one motor operates two ring-shaped links.

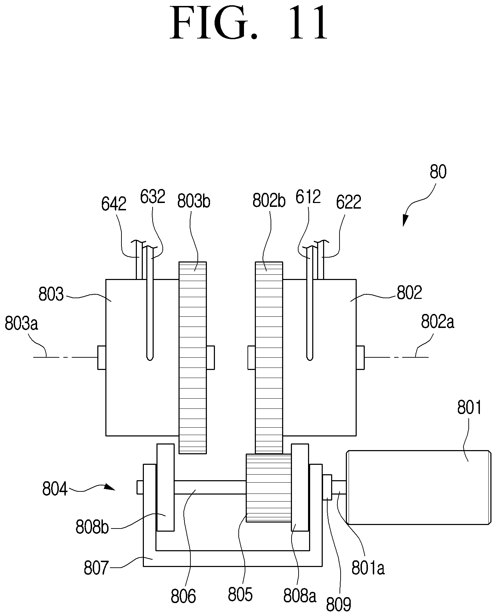

FIG 11 is a conceptual view illustrating a driving device 80 used in a manipulator 1 according to one or more embodiments of the disclosure.

Referring to FIG 11, the driving device 80 may include a motor 801, a first drum 802, a second drum 803, and a clutch 804.

The motor 801 is configured to generate rotational force and may include a motor shaft 801a capable of rotating in both directions. Thus, the motor shaft 801a may rotate in a clockwise direction or in a counter-clockwise direction.

The first drum 802 is formed in a cylindrical shape, and one end of each of the first wire 612 and the second wire 622 may be fixed to the outer circumferential surface of the first drum 802. One end of each of the first and second wires 612 and 622 may be fixed to the outer circumferential surface of the first drum 802 while being spaced apart by approximately 180 degrees.

The second drum 803 is formed in a cylindrical shape and may have the same diameter as the first drum 802. The first drum 802 may rotate around the first rotation axis 802a, and the second drum 803 may rotate around the second rotation axis 803a. The first rotation axis 802a and the second rotation axis 803a may form a straight line. However, the first drum 802 and the second drum 803 are disposed to rotate separately.

One end of each of the third wire 632 and the fourth wire 642 may be fixed to the outer circumferential surface of the second drum 803. One ends of the third and fourth wires 632 and 642 may be fixed to the outer circumferential surface of the second drum 803 while being spaced apart by approximately 180 degrees.

The clutch 804 may be formed to selectively transmit the rotational force of the motor 801 to one of the first drum 802 and the second drum 803. In other words, the clutch 804 may be formed to selectively rotate the first drum 802 and the second drum 803.

The clutch 804 may include a first gear 802b disposed coaxially with the first drum 802 on one side of the first drum 802 and a second gear 803b disposed coaxially with the second drum 803 on one side of the second drum 803.

The clutch 804 may include a drive gear 805 selectively meshed with one of the first gear 802b and the second gear 803b. The drive gear 805 may be disposed to rotate integrally with the drive shaft 806. The drive shaft 806 may be coupled to the motor shaft 801a by a coupler 809. Accordingly, when the motor shaft 801a rotates, the drive shaft 806 and drive gear 805 may rotate.

The clutch 804 may include a support bracket 807 rotatably supporting the drive shaft 806. The support bracket 807 may be formed to support both ends of the drive shaft 806.

The drive gear 805 may be disposed to move along the drive shaft 806 in the longitudinal direction of the drive shaft 806. The clutch 804 may include an actuator that moves the drive gear 805 in the longitudinal direction of the drive shaft 806. The actuator may be formed to position the drive gear 805 in one of the first position and the second position.

For example, the actuator may be implemented with two electromagnets 808a and 808b. At this time, the drive gear 805 may be formed of metal. When the first electromagnet 808a is turned on and the second electromagnet 808b is turned off, the drive gear 805 may be positioned at the first position by the magnetic force of the first electromagnet 808a. When the second electromagnet 808b is turned on and the first electromagnet 808a is turned off, the drive gear 805 may be positioned at the second position by the magnetic force of the second electromagnet 808b.

In the first position, the drive gear 805 may mesh with the first gear 802b, and in the second position, the drive gear 805 may mesh with the second gear 803b.

When the drive gear 805 meshes with the first gear 802b, the first drum 802 may rotate. Accordingly, the first ring-shaped link 10 may rotate at a predetermined angle by the first wire 612 and the second wire 622 fixed to the first drum 802. At this time, because power is not transmitted to the second drum 803 to which the third wire 632 and the fourth wire 642 are fixed, the second ring-shaped link 20 connected to the third wire 632 and the fourth wire 642 does not operate.

When the drive gear 805 meshes with the second gear 803b, the second drum 803 may rotate. Accordingly, the second ring-shaped link 20 may rotate at a predetermined angle by the third wire 632 and the fourth wire 642 fixed to the second drum 803. At this time, because power is not transmitted to the first drum 802 to which the first wire 612 and the second wire 622 are fixed, the first ring-shaped link 10 connected to the first wire 612 and the second wire 622 does not operate.

In the above, the case where the driving device 80 selectively operates the first ring-shaped link 10 and the second ring-shaped link 20 has been described, but the disclosure is not limited thereto. The driving device 80 according to the disclosure may be configured to selectively operate the second ring-shaped link 20 and the third ring-shaped link 30. Alternatively, the driving device 80 according to the disclosure may be configured to selectively operate the third ring-shaped link 30 and the fourth ring-shaped link 40.

Hereinafter, an operation of the manipulator 1 according to one or more embodiments of the disclosure will be described with reference to FIGS. 1, 4, 5, 8, 9, 12, and 13.

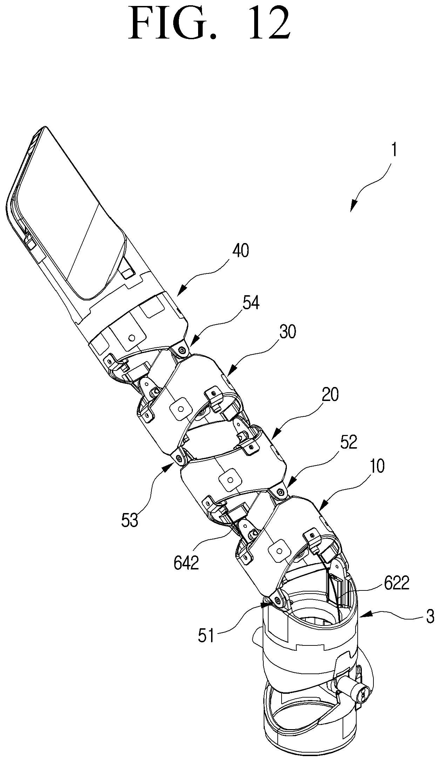

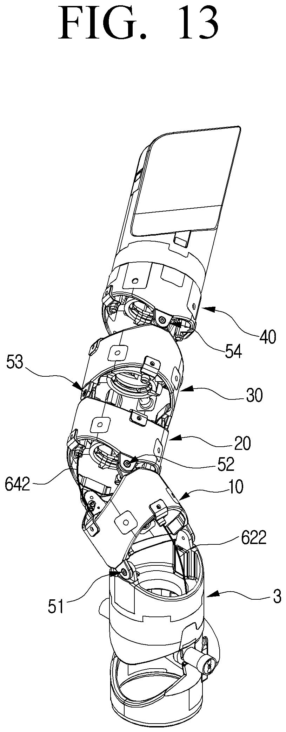

FIG 12 is a view for explaining operation of a manipulator 1 according to one or more embodiments of the disclosure. FIG 13 is a view for explaining operation of a manipulator 1 according to one or more embodiments of the disclosure. For reference, in FIGS. 12 and 13, only one wire that operates among a plurality of Borden cables is shown for convenience of illustration.

Referring to FIGS. 1, 4, 5, 8, 9, and 12, the first ring-shaped link 10 rotates at a certain angle in one direction with respect to the base link 3.

In detail, when the first motor shaft 811a of the first motor 811 rotates in one direction, the first drum 802 fixed to the first motor shaft 811a also rotates in one direction. When the first drum 802 rotates in one direction, the first wire 612 moves in one direction and is wound around the outer circumferential surface of the first drum 802, and the second wire 622 is moved a certain distance in the opposite direction to the first wire 612 by the first drum 802.

The first wire 612 passes through the first flexible conduit 611 fixed to the base link 3, and the other end of the first wire 612 is fixed to the first ring-shaped link 10. The second wire 622 passes through the second flexible conduit 621 fixed to the base link 3, and the other end of the second wire 622 is fixed to the first ring-shaped link 10.

Therefore, when the first wire 612 is wound around the first drum 802, the first wire 612 sliding inside the first flexible conduit 611 pulls the first ring-shaped link 10 and the second wire 622 sliding inside the second flexible conduit 621 pushes the first ring-shaped link 10, so that the first ring-shaped link 10 may rotate at a predetermined angle in one direction around the pair of first hinges 51.

At this time, the second ring-shaped link 20, the third ring-shaped link 30, and the fourth ring-shaped link 40 connected to the front end of the first ring-shaped link 10 maintain a straight line.

When the first motor shaft 811a of the first motor 811 rotates in the opposite direction, the first drum 802 rotates in the opposite direction. Therefore, the first ring-shaped link 10 may rotate in the opposite direction to that of FIG 12 by means of the first wire 612 and the second wire 622 having one end fixed to the first drum 802 and the other end fixed to the first ring-shaped link 10.

Referring to FIG 13, in a state where the first ring-shaped link 10 rotates at a certain angle in one direction with respect to the base link 3 as illustrated in FIG 12, the second ring-shaped link 20 rotates at a certain angle in a different direction with respect to the first ring-shaped link 10.

In detail, when the second motor shaft 821a of the second motor 821 rotates in one direction, the second drum 822 fixed to the second motor shaft 821a also rotates in one direction. When the second drum 822 rotates in one direction, the third wire 632 moves in one direction and is wound around the outer circumferential surface of the second drum 822, and the fourth wire 642 is moved a certain distance in the opposite direction to the third wire 632 by the second drum 822.

The third wire 632 passes through the third flexible conduit 631 fixed to the first ring-shaped link 10, and the other end 632b of the third wire 632 is fixed to the second ring-shaped link 20. The fourth wire 642 passes through the fourth flexible conduit 641 fixed to the first ring-shaped link 10, and the other end 642b of the fourth wire 642 is fixed to the second ring-shaped link 20.

Therefore, when the third wire 632 is wound around the second drum 822, the third wire 632 sliding inside the third flexible conduit 631 pulls the second ring-shaped link 20 and the fourth wire 642 sliding inside the fourth flexible conduit 641 pushes the second ring-shaped link 20, so that the second ring-shaped link 20 may rotate at a predetermined angle in one direction around the pair of second hinges 52.

At this time, the first ring-shaped link 10 is not affected by the rotation of the second ring-shaped link 20, and maintains the previously rotated state as it is. In addition, the third ring-shaped link 30 and the fourth ring-shaped link 40 connected, directly or indirectly, to the front end of the second ring-shaped link 20 maintains a straight line.

As describe above, because the manipulator 1 according to one or more embodiments of the disclosure includes a plurality of ring-shaped links connected, directly or indirectly, by the plurality of hinges, and the plurality of ring-shaped links is driven by a plurality of Borden cables 60 and a plurality of motor assemblies, the manipulator 1 may take a variety of postures. Accordingly, the front end of the manipulator 1 may be positioned at a target point in a complex space.

In addition, in the manipulator 1 according to one or more embodiments of the disclosure, because the plurality of ring-shaped links 10, 20, 30, and 40 and the driving device 80 are connected by the Borden cables 60, it is not necessary to dispose the driving device 80 adjacent to the ring-shaped link. Accordingly, the driving device 80 may be disposed in various positions regardless of the ring-shaped link. In other words, the degree of freedom of the arrangement of the driving device 80 for the plurality of ring-shaped links is high.

Hereinafter, a robot cleaner 100 including a manipulator 1 according to one or more embodiments of the disclosure will be described with reference to the accompanying drawings.

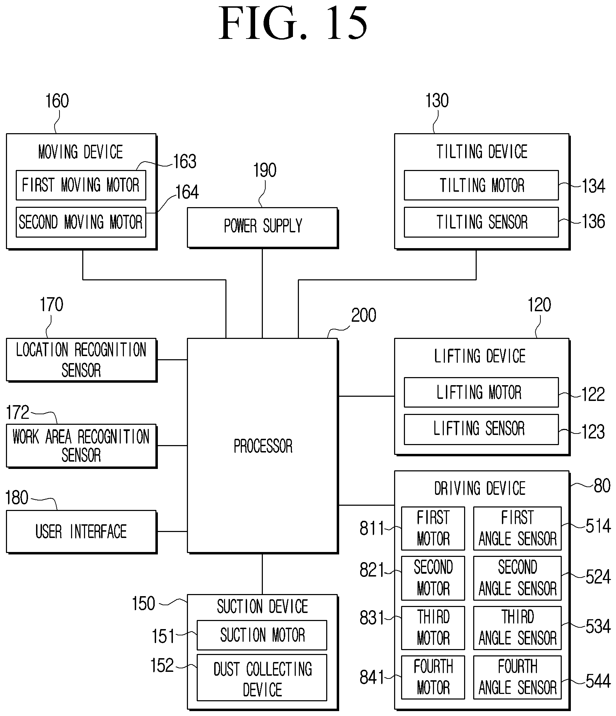

FIG 14 is a perspective view illustrating a robot cleaner 100 according to one or more embodiments of the disclosure. FIG 15 is a functional block diagram of a robot cleaner 100 according to one or more embodiments of the disclosure.

Referring to FIGS. 14 and 15, the robot cleaner 100 according to one or more embodiments of the disclosure may include a main body 110, the manipulator 1, a lifting device 120, a tilting device 130, a suction pipe 140, a suction device 150, a moving device 160, and a processor 200 comprising processing circuitry.

The main body 110 forms the exterior of the robot cleaner 100. The manipulator 1, the tilting device 130, the lifting device 120, the suction device 150, the moving device 160, and the processor 200 may be disposed inside the main body 110.

A manipulator accommodating portion 111 accommodating the plurality of ring-shaped links of the manipulator 1 may be provided on, directly or indirectly, the front surface of the main body 110. The manipulator accommodating portion 111 may be formed to have a substantially semicircular cross-section to correspond to the manipulator 1.

The manipulator 1 may move up and down along the manipulator accommodating portion 111. The manipulator 1 may turn within a predetermined angular range with respect to the manipulator accommodating portion 111.

The manipulator 1 may include the plurality of ring-shaped links 10, 20, 30, and 40. The plurality of ring-shaped links 10, 20, 30, and 40 of the manipulator 1 may be operated by the driving device 80.

The driving device 80 may include a number of motors and angle sensors corresponding to the plurality of ring-shaped links 10, 20, 30, and 40.

In this embodiment, because the manipulator 1 includes four ring-shaped links, the driving device 80 may include four motors 811, 821, 831, and 841 and four angle sensors 514, 524, 534, and 544.

In other words, the driving device 80 may include a first motor 811 for rotating the first ring-shaped link 10 and a first angle sensor 514 configured to detect a rotation angle of the first ring-shaped link 10. The driving device 80 may include a second motor 821 for rotating the second ring-shaped link 20 and a second angle sensor 524 configured to detect a rotation angle of the second ring-shaped link 20. The driving device 80 may include a third motor 831 for rotating the third ring-shaped link 30 and a third angle sensor 534 configured to detect a rotation angle of the third ring-shaped link 30. The driving device 80 may include a fourth motor 841 for rotating the fourth ring-shaped link 40 and a fourth angle sensor 544 configured to detect a rotation angle of the fourth ring-shaped link 40.

The processor 200 may control the plurality of motors 811, 821, 831, and 841 and the plurality of angle sensors 514, 524, 534, and 544 to position the work tool 45 disposed at the front end of the manipulator 1 at an arbitrary position.

The lifting device 120 may be formed to move the manipulator 1 up and down. The lifting device 120 may include a lifting block 121 to which the manipulator 1 is fixed and a lifting motor 122 for lifting the lifting block 121. The lifting device 120 may include a lifting sensor 123 configured to detect the position of the lifting block 121, that is, the position of the manipulator 1.

When the manipulator 1 moves up and down with respect to the main body 110 by the lifting device 120, the driving device 80 of the manipulator 1 is fixed within the main body 110. The driving device 80 is connected to the plurality of ring-shaped links 10, 20, 30, and 40 through the plurality of Borden cables 60. Therefore, when the manipulator 1 is moved up and down by the lifting device 120, the manipulator 1 may be operated by the driving device 80.

The tilting device 130 may be formed to turn the manipulator 1 within a predetermined angular range with respect to the main body 110. The tilting device 130 may be formed to turn the base link 3 of the manipulator 1 at a predetermined angle. The tilting device 130 may include a tilting motor 134 for rotating the base link 3 of the manipulator 1 and a tilting sensor 136 configured to detect a rotation angle of the base link 3.

The tilting device 130 may be moved up and down by the lifting device 120 together with the manipulator 1. Therefore, the tilting device 130 may be disposed on the lifting block 121 of the lifting device 120.

The suction pipe 140 may be disposed inside the manipulator 1. In other words, the suction pipe 140 may be disposed inside the base link 3, the first ring-shaped link 10, the second ring-shaped link 20, the third ring-shaped link 30, and the fourth ring-shaped link 40.

The suction pipe 140 may be supported by the holder 49 provided inside each of the first ring-shaped link 10, the second ring-shaped link 20, the third ring-shaped link 30, and fourth ring-shaped link 40. Referring to FIG 2, the holder 49 may be formed in a ring shape and may be fixed to the inner circumferential surfaces of the ring-shaped links 10, 20, 30, and 40 with a plurality of arms. Therefore, the suction pipe 140 may not interfere with the plurality of Borden cables 60 that drive the plurality of ring-shaped links 10, 20, 30, and 40.

One end of the suction pipe 140 may be connected, directly or indirectly, to the suction nozzle 45 provided at the front end of the fourth ring-shaped link 40. The other end of the suction pipe 140 may be connected, directly or indirectly, to the suction device 150 disposed inside the main body 110.

The suction device 150 may be formed to collect dirt by generating a suction force. The suction device 150 may include a suction motor 151 and a dust collecting device 152. The suction motor 151 may be configured to generate the suction force. The dust collecting device 152 may be disposed in front of the suction motor 151, and may be connected, directly or indirectly, to the other end of the suction pipe 140. The dust collecting device 152 may be formed to separate and collect dirt sucked together with air through the suction pipe 140 by the suction force of the suction motor 151.

Therefore, when the processor 200 controls the manipulator 1 to place the suction nozzle 45 in the work area, dirt in the work area may be introduced into the suction nozzle 45 by the suction force generated by the suction device 150. Dirt introduced into the suction nozzle 45 may move along the suction pipe 140 and be collected in the dust collecting device 152.

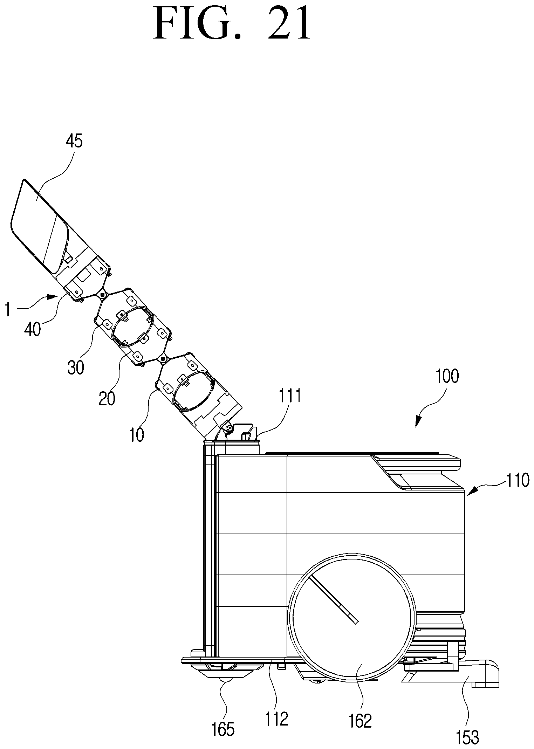

The suction device 150 may include a lower suction nozzle 153 (see FIG 21). The lower suction nozzle 153 may be formed below the base 112 of the main body 110 to face the floor on which the robot cleaner 100 is placed. Therefore, when the suction device 150 operates, dirt on the floor may be sucked through the lower suction nozzle 153.

The moving device 160 may be formed to move the main body 110 on a flat floor. The moving device 160 may include a pair of wheels 161 and 162. The pair of wheels, that is, a first wheel 161 and a second wheel 162 may be rotatably disposed on the left and right surfaces of the main body 110.

The first wheel 161 may be formed to rotate by a first moving motor 163. The first moving motor 163 may be disposed inside the main body 110. In other words, the first moving motor 163 may be disposed on, directly or indirectly, the base 112 provided on the lower portion of the main body 110.

The second wheel 162 may be formed to rotate by the second moving motor 164. The second moving motor 164 may be disposed inside the main body 110. The second moving motor 164 may be disposed on the base 112 of the main body 110 to be symmetrical with the first moving motor 163.

An auxiliary wheel 165 may be disposed on the lower surface of the base 112 of the main body 110. The auxiliary wheel 165 may be disposed below the manipulator accommodating portion 111.

The processor 200 may control the first moving motor 163 and the second moving motor 164 to move the robot cleaner 100 forward, backward, left and right.

The robot cleaner 100 may include a location recognition sensor 170 to recognize its own location. For example, a sensor capable of recognizing the current location of the robot cleaner 100, such as an image sensor, may be used as the location recognition sensor 170.

The robot cleaner 100 may include a work area recognition sensor 172. The work area recognition sensor 172 may be configured to recognize a work area where the front end of the manipulator 1 is to be located. The work area recognition sensor 172 may be configured to recognize a work area in a three-dimensional space in front of the robot cleaner 100. For example, an image sensor such as a camera may be used as the work area recognition sensor 172.

For example, the work area may be a surface to be cleaned located higher than the floor on which the robot cleaner 100 moves. Alternatively, the work area may be a narrow space into which the robot cleaner 100 cannot enter but the manipulator 1 can enter.

The processor 200 may control the location recognition sensor 170 and the moving device 160 to move the robot cleaner 100 to the vicinity of the work area. The processor 200 may control the driving device 80 of the manipulator 1 to position the suction nozzle 45 disposed at the front end of the manipulator 1 in the work area.

The robot cleaner 100 may include a user interface 180. The user interface 180 may be formed so that a user controls the robot cleaner 100. The user interface 180 may be formed as a touch display, a plurality of buttons, etc. provided on, directly or indirectly, the main body 110. The user interface 180 may include a power switch configured to turn on/off power of the robot cleaner 100 and a start button configured to start or stop an operation of the robot cleaner 100.

The user interface 180 may be implemented as a remote control provided separately from the robot cleaner 100. In this case, the main body 110 may be provided with a remote control receiver configured to receive a signal from the remote control. The processor 200 is electrically connected, directly or indirectly, to the remote control receiver and may control the robot cleaner 100 based on a signal from the remote control.

The user interface 180 may include a robot cleaner application installed on a mobile device such as a smartphone. In this case, the processor 200 of the robot cleaner 100 may be connected to the mobile device through various mobile communication methods such as Blutooth, WiFi, 4G, 5G, and the like.

The robot cleaner 100 may include a power supply 190. The power supply 190 may be formed to supply power to components constituting the robot cleaner 100. A rechargeable battery may be used as the power supply 190.

The processor 200 may be configured to control the manipulator 1, the tilting device 130, the lifting device 120, the suction device 150, and the moving device 160.

The processor 200 may identify the state of the power supply 190 and control the robot cleaner 100 to automatically charge power when power is insufficient.

The processor 200 may control the robot cleaner 100 based on a command input through the user interface 180.

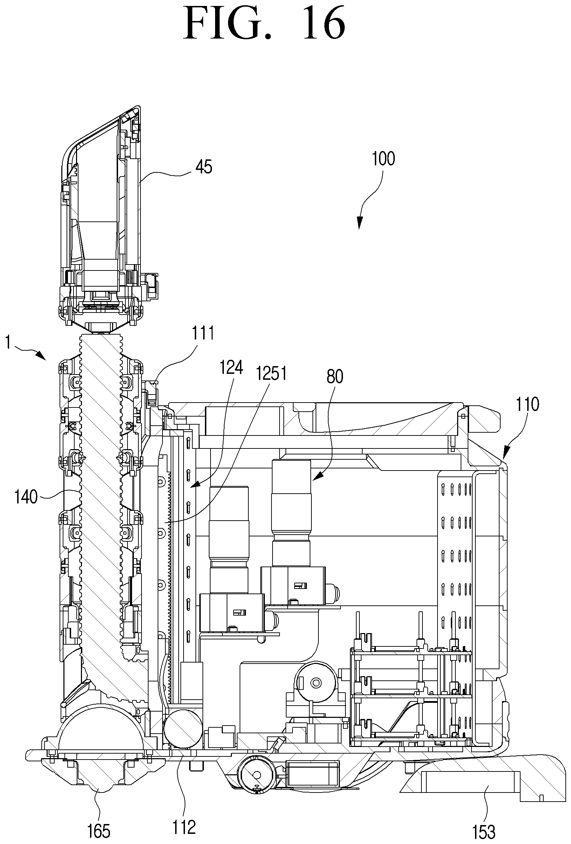

Hereinafter, the lifting device 120 and the tilting device 130 will be described in detail with reference to FIGS. 16 to 20.

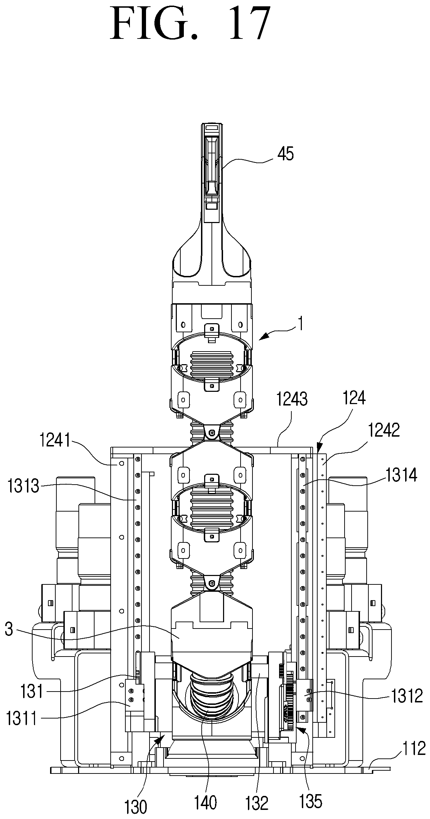

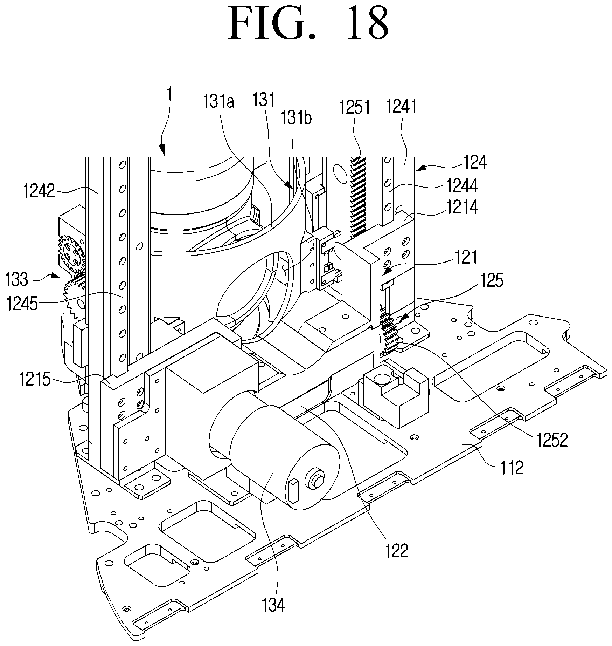

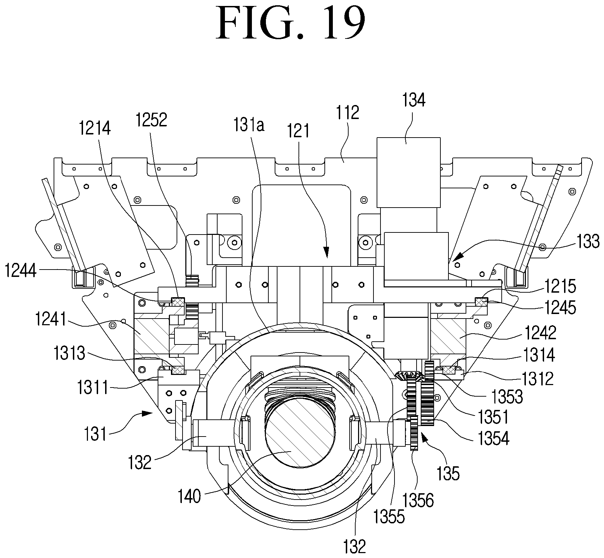

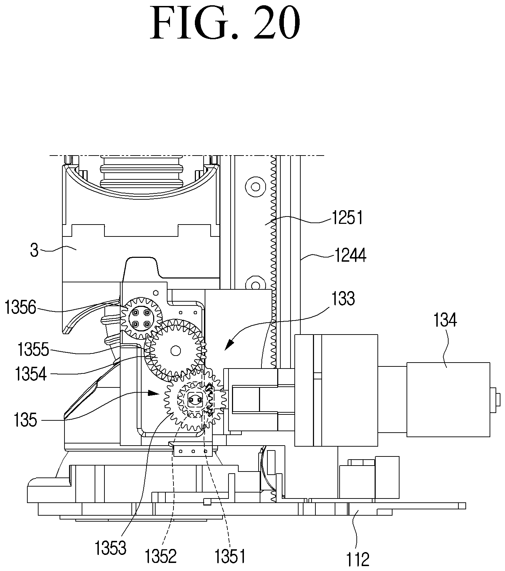

FIG 16 is a cross-sectional view illustrating a robot cleaner 100 according to one or more embodiments of the disclosure. FIG 17 is a perspective view illustrating a lifting device 120 and a tilting device 130 of a robot cleaner 100 according to one or more embodiments of the disclosure. FIG 18 is a partial perspective view illustrating a lifting device 120 and a tilting device 130 of a robot cleaner 100 according to one or more embodiments of the disclosure. FIG 19 is a cross-sectional view illustrating the lifting device 120 and the tilting device 130 of FIG 17 taken along line C-C. FIG 20 is a cross-sectional view illustrating the lifting device 120 and the tilting device 130 of FIG 19 taken along line D-D.

Referring to FIGS. 16 to 20, the lifting device 120 may include a lifting guide 124, a lifting block 121, and a lifting driver 125.

The lifting guide 124 may be disposed behind the manipulator accommodating portion 111 disposed on the front surface of the main body 110. In other words, the lifting guide 124 may be disposed behind the manipulator 1.

The lifting guide 124 may be vertically disposed on the base 112 of the main body 110. The lifting guide 124 may include a first pillar 1241 and a second pillar 1242 that are disposed side by side on the base 112 at a predetermined interval, and a connection plate 1243 disposed on the upper ends of the first pillar 1241 and the second pillar 1242. Thus, the lifting guide 124 may be formed in a rectangular frame shape.

A pair of linear motion guides (LM guides) may be disposed in parallel on one surface of the lifting guide 124. In other words, a first LM guide 1244 may be disposed on the first pillar 1241, and a second LM guide 1245 may be disposed on the second pillar 1242.

The lifting block 121 may be provided to move up and down along the lifting guide 124. A pair of linear motion blocks (LM blocks) may be disposed on one side of the lifting block 121. The pair of LM blocks may be slidably coupled, directly or indirectly, to the pair of LM guides disposed on the lifting guide 124.

In other words, the lifting block 121 may include a first LM block 1214 coupled to the first LM guide 1244 and a second LM block 1215 coupled to the second LM guide 1245. Thus, the lifting block 121 may slide up and down along the lifting guide 124.

The lifting block 121 may move up and down by the lifting driver 125. In other words, the lifting driver 125 may be formed to move the lifting block 121 up and down with respect to the lifting guide 124.

For example, the lifting driver 125 may include a rack gear 1251 disposed in the vertical direction on the lifting guide 124, a lifting pinion 1252 meshed with the rack gear 1251, and a lifting motor 122 for rotating the lifting pinion 1252.

The rack gear 1251 may be disposed perpendicularly to the base 112 of the main body 110 on one surface of the first pillar 1241. The rack gear 1251 may be disposed parallel to the first LM guide 1244 on one surface of the first pillar 1241.

The lifting motor 122 may be disposed on the lifting block 121. The lifting motor 122 may rotate in both directions. The lifting pinion 1252 may be coupled to the shaft of the lifting motor 122. The lifting pinion 1252 may be disposed to rotate integrally with the shaft of the lifting motor 122.

The lifting pinion 1252 may be disposed to mesh with the rack gear 1251. Accordingly, when the shaft of the lifting motor 122 rotates, the lifting pinion 1252 rotates. When the lifting pinion 1252 rotates, the lifting block 121 moves along the rack gear 1251. For example, when the lifting motor 122 rotates in one direction, the lifting block 121 rises along the rack gear 1251, and when the lifting motor 122 rotates in the opposite direction, the lifting block 121 may descend along the rack gear 1251.

The tilting device 130 may be disposed to move up and down by the lifting device 120. In other words, the tilting device 130 may be disposed on the lifting block 121 of the lifting device 120.

The tilting device 130 may include a tilting base 131, a tilting shaft 132, and a tilting driver 133.

The tilting base 131 may be provided on the lifting block 121. The tilting base 131 may be fixed to the rear surface of the lifting block 121.

A pair of LM blocks, that is, a third LM block 1311 and a fourth LM block 1312 may be disposed on both sides of the tilting base 131. An intermediate portion between the both sides of the tilting base 131 may be formed as a curve surface 131a. In other words, the intermediate portion of the tilting base 131 may be formed as a curved plate having a curvature corresponding to the manipulator accommodating portion 111. An opening 131b may be formed in the curved plate. The opening 131b may be formed so that the plurality of Borden cables 60 and the suction pipe 140 pass through the opening 131b.

A pair of LM guides for guiding vertical movement of the tilting base 131 may be disposed on the other surface of the lifting guide 124. In other words, a third LM guide 1313 may be disposed on the surface opposite to one surface of the first pillar 1241 on which the first LM guide 1244 is disposed, and a fourth LM guide 1314 may be disposed on the surface opposite to one surface of the second pillar 1242 on which the second LM guide 1245 is disposed.

The third LM block 1311 and the fourth LM block 1312 of the tilting base 131 may be coupled, directly or indirectly, to the third LM guide 1313 and the fourth LM guide 1314 of the lifting guide 124, respectively. Accordingly, the tilting base 131 may linearly move up and down along the lifting guide 124.

The tilting shaft 132 may be disposed on the base link 3 of the manipulator 1. The tilting shaft 132 may be disposed to protrude outward from both side surfaces of the base link 3. The tilting shaft 132 may include a left tilting shaft and a right tilting shaft. The left tilting shaft and the right tilting shaft may be disposed to be positioned on a straight line.

The tilting shaft 132 may be rotatably supported by the tilting base 131. Accordingly, the base link 3 of the manipulator 1 may rotate with respect to the tilting base 131 about the tilting shaft 132.

The tilting shaft 132 may be rotated by the tilting driver 133. Referring to FIGS. 17 and 19, the right tilting shaft 132 is provided to rotate by the tilting driver 133. Accordingly, when the tilting driver 133 rotates the right tilting shaft 132, the base link 3 may rotate at a certain angle with respect to the tilting base 131 around the tilting shaft 132. Because the base link 3 is integrally with the manipulator 1, when the base link 3 rotates, the manipulator 1 may rotate at a certain angle around the tilting shaft 132.

The tilting driver 133 may be configured to rotate the tilting shaft 132. For example, the tilting driver 133 may include a tilting motor 134 and a power transmission device 135.

The tilting motor 134 may be disposed on the lifting block 121. The tilting motor 134 may be configured to rotate in both directions. A first bevel gear 1351 (e.g., see Fig. 19) may be disposed at the shaft of the tilting motor 134. The first bevel gear 1351 may be disposed to rotate integrally with the shaft of the tilting motor 134.

The power transmission device 135 may be formed to transmit the rotational force of the tilting motor 134 to the tilting shaft 132. The power transmission device 135 may be formed of a plurality of gears. The power transmission device 135 may be formed appropriately according to the arrangement of the tilting motor 134 and the tilting shaft 132, the number of revolutions of the tilting motor 134, and the like.

For example, in the case of the embodiment shown in FIGS. 19 and 20, the power transmission device 135 may include a second bevel gear 1352 meshed with the first bevel gear 1351 coupled, directly or indirectly, to the tilting motor 134, a first spur gear 1353 integrally formed coaxially with the second bevel gear 1352, a second spur gear 1354 meshed with the first spur gear 1353, a third spur gear 1355 integrally formed coaxially with the second spur gear 1354, and a tilting gear 1356 that is meshed with the third spur gear 1355 and fixed to the tilting shaft 132. Accordingly, when the tilting motor 134 rotates, the tilting gear 1356 may rotate. When the tilting gear 1356 rotates, the tilting shaft 132 integrally disposed with the tilting gear 1356 may rotate. When the tilting shaft 132 rotates, the manipulator 1 may rotate with respect to the main body 110 of the robot cleaner 100 around the tilting shaft 132.

The tilting device 130 may include a tilting sensor 136 configured to detect a rotational angle of the tilting shaft 132. Accordingly, the processor 200 may identify the rotational angle of the tilting shaft 132 using the tilting sensor 136. In other words, the processor 200 may identify the tilt angle of the manipulator 1 with respect to the main body 110 using the tilting sensor 136.

Hereinafter, operations of the lifting device 120 and the tilting device 130 of the robot cleaner 100 according to one or more embodiments of the disclosure will be described with reference to FIGS. 14, 16, and 21.

FIG 21 is a view illustrating a state in which a manipulator 1 of a robot cleaner 100 according to one or more embodiments of the disclosure moves up and rotates at a certain angle.

Referring to FIGS. 14 and 16, the manipulator 1 is located at the lower end of the manipulator accommodating portion 111 and maintains a vertical state with respect to the base 112 of the main body 110.

In this state, when the processor 200 operates the lifting motor 122, the lifting block 121 moves up along the lifting guide 124. When the lifting block 121 rises, the manipulator 1 fixed to the lifting block 121 is moved up. Then, as illustrated in FIG 21, the suction nozzle 45 of the manipulator 1 is moved up and protrudes further above the main body 110.

In this state, when the processor 200 operates the tilting motor 134, the tilting shaft 132 rotates. Because the tilting shaft 132 is fixed to the base link 3 of the manipulator 1, when the tilting shaft 132 rotates, the manipulator 1 rotates around the tilting shaft 132. Then, as illustrated in FIG 21, the manipulator 1 is inclined at a certain angle with respect to the floor.

In this state, the processor 200 operates the plurality of ring-shaped links 10, 20, 30, and 40 of the manipulator 1 to position the suction nozzle 45 disposed at the front end of the fourth ring-shaped link 40 to the working position.

Hereinafter, an operation of the robot cleaner 100 according to one or more embodiments of the disclosure to clean a target cleaning point in a space above the floor will be described. The target cleaning point may be recognized by the user to robot cleaner 100 using the user interface 180.

The user turns on the power of the robot cleaner 100 and presses the start button.

Then, the processor 200 may control the moving device 160 to position the robot cleaner 100 near the target cleaning point.

Next, the processor 200 may identify the target cleaning point using the work area recognition sensor 172.

Then, the processor 200 may control the manipulator 1 to position the suction nozzle 45 at the target cleaning point. In this case, the processor 200 may identify a rotation angle of each of the plurality of ring-shaped links 10, 20, 30, and 40 based on inverse kinematics in order to approach the target cleaning point. Subsequently, the processor 200 may control the driving device 80 to rotate each of the plurality of ring-shaped links 10, 20, 30, and 40 at the identified rotation angle. Then, the suction nozzle 45 may be located at the target cleaning point.

When the suction nozzle 45 reaches the target cleaning point, the processor 200 may control the suction device 150 to clean the target cleaning point.

When the cleaning operation of the current target cleaning point is completed, the processor 200 may control and move the robot cleaner 100 to the next target cleaning point. When the robot cleaner 100 reaches the next target cleaning point, the processor 200 may control the manipulator 1 to perform cleaning.

Each embodiment(s) herein may be used in combination with any other embodiment(s) described herein.

As described above, because the robot cleaner 100 according to one or more embodiments of the disclosure includes the manipulator 1 capable of taking various postures, the robot cleaner 100 may clean corners that cannot be cleaned by the conventional robot cleaners.

In addition, because the robot cleaner 100 according to one or more embodiments of the disclosure may suck in dirt using the suction nozzle 45 attached to the front end of the manipulator 1 and the suction pipe 140 accommodated inside the manipulator 1, the robot cleaner 100 may suck in dirt that exists higher than the floor on which the robot cleaner 100 travels.

In addition, because the robot cleaner 100 according to one or more embodiments of the disclosure may move the manipulator 1 up and down using the lifting device 120 and may rotate the manipulator 1 within a predetermined angular range using the tilting device 130, the robot cleaner 100 may have a very wide working area for cleaning compared to the conventional robot cleaners that can only clean the floor.

In the foregoing, the disclosure has been shown and described with reference to various embodiments. However, it is understood by those skilled in the art that various changes may be made in form and detail without departing from the scope of the disclosure as defined by the appended claims and equivalents thereof.

## Claims

1. A manipulator comprising:
a base link having a ring shape;
a first ring-shaped link having a ring shape and disposed to rotate at a predetermined angle at a front end of the base link;
a second ring-shaped link having a ring shape and disposed to rotate at a predetermined angle at a front end of the first ring-shaped link;
a first Borden cable and a second Borden cable connected to the first ring-shaped link and formed to rotate the first ring-shaped link;
a third Borden cable and a fourth Borden cable connected to the second ring-shaped link and formed to rotate the second ring-shaped link; and
a driving device that operates the first Borden cable, the second Borden cable, the
third Borden cable, and the fourth Borden cable.

2. The manipulator of claim 1, wherein
the first Borden cable comprises:
a first flexible conduit having one end connected to the driving device and another end connected to the base link; and
a first wire accommodated at least partially inside the first flexible conduit and having one end connected to the driving device and another end fixed to the first ring-shaped link, and
wherein the second Borden cable comprises:
a second flexible conduit having one end connected to the driving device and
another end connected to the base link opposite to the first flexible conduit based on a rotation axis of the first ring-shaped link; and
a second wire accommodated at least partially inside the second flexible conduit and having one end connected to the driving device and another end fixed to the first ring-shaped link opposite to the first wire based on a rotation axis of the first ring-shaped link.

3. The manipulator of claim 1, wherein
the third Borden cable comprises:
a third flexible conduit having one end connected to the driving device and another end connected to the first ring-shaped link; and
a third wire accommodated at least partially inside the third flexible conduit and having one end connected to the driving device and another end fixed to the second ring-shaped link, and
wherein the fourth Borden cable comprises:
a fourth flexible conduit having one end connected to the driving device and
another end connected to the first ring-shaped link opposite to the third flexible conduit based on a rotation axis of the second ring-shaped link; and
a fourth wire accommodated at least partially inside the fourth flexible conduit and having one end connected to the driving device and another end fixed to the second ring-shaped link opposite to the third wire based on a rotation axis of the second ring-shaped link.

4. The manipulator of claim 3, wherein
the driving device comprises:
a first motor including a first motor shaft;
a first drum disposed to rotate with the first motor shaft;
a second motor including a second motor shaft; and
a second drum disposed to rotate with the second motor shaft,
wherein the one end of the first wire and the one end of the second wire are fixed to the first drum, and
wherein the one end of the third wire and the one end of the fourth wire are fixed to the second drum.

5. The manipulator of claim 1, wherein
the driving device comprises:
a motor;
a first drum to which the one end of the first wire and the one end of the second wire are fixed;
a second drum to which the one end of the third wire and the one end of the fourth wire are fixed; and
a clutch formed to selectively transmit rotational force of the motor to one of the first drum and the second drum.

6. The manipulator of claim 1, wherein
the first ring-shaped link is rotatably connected to the base link at least by a pair of first hinges, and
the second ring-shaped link is rotatably connected to the first ring-shaped link at least by a pair of second hinges.

7. The manipulator of claim 6, wherein
a rotation axis of the pair of first hinges and a rotation axis of the pair of second hinges are not parallel to each other.

8. The manipulator of claim 1 further comprising:
a first angle sensor configured to detect a rotation angle of the first ring-shaped link; and
a second angle sensor configured to detect a rotation angle of the second ring-shaped link.

9. The manipulator of claim 1, wherein
each of the first Borden cable, the second Borden cable, the third Borden cable, and
the fourth Borden cable comprises a tension adjuster.

10. A robot cleaner comprising:
a main body;
a manipulator disposed on a front surface of the main body;
a suction pipe disposed inside the manipulator;
a suction device connected to the suction pipe and configured to collect dirt by generating a suction force;
a moving device configured to move the main body; and
a processor configured to control the manipulator and the suction device,
wherein the manipulator comprises:
a base link having a ring shape;
a first ring-shaped link having a ring shape and disposed to rotate at a predetermined angle at a front end of the base link;
a second ring-shaped link having a ring shape and disposed to rotate at a predetermined angle at a front end of the first ring-shaped link;
a first Borden cable and a second Borden cable connected to the first ring-shaped link and formed to rotate the first ring-shaped link;
a third Borden cable and a fourth Borden cable connected to the second ring-shaped link and formed to rotate the second ring-shaped link; and
a driving device that operates the first Borden cable, the second Borden cable, the third Borden cable, and the fourth Borden cable.

11. The robot cleaner of claim 10, wherein the robot cleaner further comprises: a lifting device configured to lift the manipulator and a tilting device,
wherein the lifting device comprises:
a lifting guide vertically disposed on a base of the main body behind the manipulator;
a lifting block provided to move up and down along the lifting guide; and
a lifting driver configured to move the lifting block up and down with respect to the lifting guide.

12. The robot cleaner of claim 11, wherein
the lifting driver comprises:
a rack gear disposed in a vertical direction to the lifting guide;
a lifting pinion meshed with the rack gear; and
a lifting motor configured to rotate the lifting pinion.

13. The robot cleaner of claim 11, wherein
the tilting device comprises:
a tilting base provided on the lifting block;
a tilting shaft disposed on the base link of the manipulator; and
a tilting driver configured to rotate the tilting shaft.

14. The robot cleaner of claim 13, wherein
the tilting driver comprises:
a tilting motor configured to generate rotational force; and
a power transmission device disposed on one surface of the tilting base and formed to transmit the rotational force of the tilting motor to the tilting shaft.

15. The robot cleaner of claim 10, wherein
each of the first ring-shaped link and the second ring-shaped link comprises a holder disposed at a center of each of the first ring-shaped link and the second ring-shaped link and fixing the suction pipe.
